# EUROPÄISCHE PATENTSCHRIFT

(11) **EP 3 980 331 B1**
(45) Veröffentlichungstag und Bekanntmachung des Hinweises auf die Patenterteilung: **29.01.2025**
(21) Anmeldenummer: 20733696.7
(22) Anmeldetag: 05.06.2020
(51) Int. Cl.: B64D 11/00, B64D 11/06, G06Q 10/06, G06Q 10/02

(54) **SITZSYSTEM**
SEAT SYSTEM
SYSTÈME DE SIÈGE

(30) Priorität: 05.06.2019 DE 102019115203
(43) Veröffentlichungstag der Anmeldung: 13.04.2022
(73) Patentinhaber: Recaro Aircraft Seating GmbH & Co. KG, 74523 Schwäbisch Hall (DE)
(72) Erfinder: STEINMEYER, Klaus, 74538 Rosengarten (DE); JUNG, Daniel, 74523 Schwäbisch Hall (DE); STRECKERT, Michael, 74523 Schwäbisch Hall (DE)
(74) Vertreter: Daub, Thomas
(86) Internationale Anmeldenummer: PCT/EP2020/065630
(87) Internationale Veröffentlichungsnummer: WO 2020/245359

(56) Entgegenhaltungen:
- EP-A1- 3 081 488
- WO-A1-2007/019623
- DE-A1- 102009 001 366
- GB-A- 2 524 495
- US-A1- 2005 132 407
- US-A1- 2011 314 489
- US-A1- 2017 182 957

## Beschreibung

### Stand der Technik

Die Erfindung betrifft ein Sitzsystem.

Es ist bereits ein Sitzsystem vorgeschlagen worden, siehe DE 10 2009 001366 A1.

Die Aufgabe der Erfindung besteht insbesondere darin, eine gattungsgemäße Vorrichtung mit verbesserten Eigenschaften hinsichtlich eines nutzerspezifischen Funktions- und/oder Leistungsumfangs bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Erfindungsgemäß wird ein Sitzsystem, insbesondere ein Flugzeugsitzsystem, mit zumindest einer Sitzvorrichtung, die wenigstens einen Sitz umfasst, und mit einem Zubuchungs- und/oder Abbuchungssystem vorgeschlagen, wobei das Zubuchungs- und/oder Abbuchungssystem zumindest teilweise dazu vorgesehen ist, zumindest eine individuelle Serviceleistung und/oder zumindest eine Komforteigenschaft zuzubuchen und/oder abzubuchen. Durch die erfindungsgemäße Ausgestaltung kann vorteilhaft ein Sitzsystem mit einem nutzerspezifischen Funktions- und/oder Leistungsumfang bereitgestellt werden. Dadurch kann ein Nutzer vorteilhaft auswählen, welche individuellen Serviceleistungen und/oder Komforteigenschaften er in Anspruch nehmen möchte und/oder welche er nicht in Anspruch nehmen möchte. Durch die erfindungsgemäße Ausgestaltung können eine Wartungsfreundlichkeit und eine Reinigungsfreundlichkeit vorteilhaft erhöht werden, da lediglich in Anspruch genommene individuelle Serviceleistungen und/oder Komforteigenschaften überprüft, gereinigt und/oder gewartet werden müssen. Durch die erfindungsgemäße Ausgestaltung kann ein vorteilhaft optimal auf den Nutzer abgestimmtes Produkt, insbesondere eine Transportdienstleistung, angeboten werden. Dadurch kann vorteilhaft eine Ertragssteigerung für einen Anbieter eines Transports, insbesondere eine Fluggesellschaft, erreicht werden. Das Sitzsystem ist insbesondere zu einem Einsatz in einem Transportmittel, insbesondere in einem Flugzeug, vorgesehen. Vorzugsweise umfasst das Transportmittel das Sitzsystem. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Vorzugsweise umfasst die zumindest eine Sitzvorrichtung zumindest einen Sitz. Vorzugsweise bildet die zumindest eine Sitzvorrichtung wenigstens einen Sitzbereich aus. Der wenigstens eine Sitzbereich ist insbesondere zu einem Aufenthalt eines Nutzers während des Transports, insbesondere während eines Fluges, vorgesehen. Unter einer "individuellen Serviceleistung" soll insbesondere eine Leistung verstanden werden, die während des Transports, insbesondere während des Fluges, durch den Nutzer in Anspruch genommen wird. Vorzugsweise ist die zumindest eine individuelle Serviceleistung als eine Verpflegung, als ein In-Flight-Entertainment (IFE) und/oder als ein Warenverkauf ausgebildet. Unter einer "Komforteigenschaft" soll insbesondere eine Eigenschaft der zumindest einen Sitzvorrichtung verstanden werden, die eine Bequemlichkeit und/oder ein Wohlbefinden für den Nutzer verbessert. Unter einem "Nutzer" soll insbesondere ein Passagier verstanden werden. Unter "zubuchen" soll insbesondere verstanden werden, dass die zumindest eine individuelle Serviceleistung und/oder die zumindest eine Komforteigenschaft zusätzlich zu einer eigentlichen Buchung des Transports, insbesondere des Fluges, optional buchbar ist, wobei eine Zubuchung insbesondere zeitlich unabhängig von der Buchung des Transports ist. Dadurch kann der Nutzer vorteilhaft nur die zumindest eine individuelle Serviceleistung und/oder die zumindest eine Komforteigenschaft, insbesondere kostenpflichtig, hinzubuchen, die er in Anspruch nehmen möchte. Dadurch kann für den Nutzer ein vorteilhaft kostenoptimierter Transport mit der zumindest einen individuellen Serviceleistung und/oder der zumindest einen Komforteigenschaft ermöglicht werden. Ferner kann der Anbieter des Transports durch eine Zubuchung der zumindest einen individuellen Serviceleistung und/oder der zumindest einen Komforteigenschaft vorteilhaft Zusatzeinnahmen generieren. Unter "abbuchen" soll insbesondere verstanden werden, dass die zumindest eine individuelle Serviceleistung und/oder die zumindest eine Komforteigenschaft zusätzlich zu einer eigentlichen Buchung des Transports, insbesondere des Fluges, standardmäßig inkludiert ist und optional abwählbar ist, wobei eine Abbuchung insbesondere zeitlich unabhängig von der Buchung des Transports ist. Dadurch kann vorteilhaft eine Kostensenkung und/oder eine Gutschrift für den Nutzer bei einem Verzicht auf die zumindest eine individuelle Serviceleistung und/oder die zumindest eine Komforteigenschaft ermöglicht werden.

Des Weiteren wird vorgeschlagen, dass das Sitzsystem zumindest eine, insbesondere zentrale, Recheneinheit und zumindest eine Datenübertragungseinheit aufweist, wobei die zumindest eine Datenübertragungseinheit zumindest dazu vorgesehen ist, die zumindest eine Recheneinheit mit der zumindest einen Sitzvorrichtung für eine Datenübertragung kabellos und/oder kabelgebunden zu verbinden. Durch diese Ausgestaltung kann vorteilhaft eine strukturierte Datenverarbeitung erreicht werden. Unter "zentral" soll insbesondere verstanden werden, dass die zumindest eine Recheneinheit mit zumindest zwei Sitzvorrichtungen verbunden ist. Vorzugsweise ist die zumindest eine Recheneinheit über die zumindest eine Datenübertragungseinheit mit mehreren Sitzvorrichtungen verbunden. Die zumindest eine Recheneinheit ist insbesondere dazu vorgesehen, Daten für mehrere Sitzvorrichtungen zu verarbeiten. Vorzugsweise ist die zumindest eine Recheneinheit dazu vorgesehen, mit zumindest einer Sitzreihe, zumindest einer Sitzspalte und/oder zumindest einem Sitzabteil verbunden zu werden. Unter einem "Sitzabteil" soll insbesondere ein Bereich in einer Flugzeugkabine verstanden werden, in dem mehrere Sitzvorrichtungen angeordnet sind, wobei der Bereich von mindestens einem weiteren Bereich, insbesondere durch wenigstens eine Trennwand, abgetrennt ist. Vorzugsweise weist die zumindest eine Datenübertragungseinheit zumindest eine Sende- und/oder Empfangseinheit und/oder zumindest ein Datenkabel auf. Das zumindest eine Datenkabel ist insbesondere als ein Netzwerkdatenkabel ausgebildet. Vorzugsweise ist die zumindest eine Recheneinheit kabelgebunden über das zumindest eine Datenkabel mit der zumindest einen Sitzvorrichtung verbunden. Besonders bevorzugt ist die zumindest eine Recheneinheit kabelgebunden über das zumindest eine Datenkabel mittels eines Bus-Systems, insbesondere eines CAN-Bus-Systems, mit der zumindest einen Sitzvorrichtung verbunden. Vorzugsweise ist die zumindest eine Recheneinheit kabellos über WLAN, Bluetooth und/oder Nahfeldkommunikation mit der zumindest einen Sitzvorrichtung verbunden. Vorzugsweise ist die Datenübertragung verschlüsselt ausgebildet. Alternativ wäre auch denkbar, dass die zumindest eine Recheneinheit dezentral ausgebildet ist. Unter "dezentral" soll insbesondere verstanden werden, dass die zumindest eine Recheneinheit zumindest einer Gruppierung von mehreren Sitzvorrichtungen der zumindest einen Sitzvorrichtung, der zumindest einen Sitzvorrichtung und/oder dem zumindest einen Sitz zugeordnet ist, wobei die zumindest eine Recheneinheit in der zumindest einen Sitzvorrichtung und/oder an dem zumindest einen Sitz angeordnet ist. Unter einer "Gruppierung von mehreren Sitzvorrichtungen" soll insbesondere eine Anordnung verstanden werden, die mehrere Sitzvorrichtungen umfasst, wobei die mehreren Sitzvorrichtungen vorzugsweise benachbart zueinander angeordnet sind. Beispielsweise könnte die zumindest eine Gruppierung von mehreren Sitzvorrichtungen zwei hintereinander und/oder nebeneinander angeordnete Sitzvorrichtungen umfassen. Grundsätzlich kann die zumindest eine Gruppierung von mehreren Sitzvorrichtungen auch als das zumindest eine Sitzabteil ausgebildet sein. Besonders bevorzugt weist das Sitzsystem zumindest zwei dezentrale Recheneinheiten auf, die in unterschiedlichen Gruppierungen von mehreren Sitzvorrichtungen, in unterschiedlichen Sitzvorrichtungen und/oder in unterschiedlichen Sitzen angeordnet sind. Vorzugsweise ist die zumindest eine dezentral ausgebildete Recheneinheit zu einer sitzindividuellen Datenverarbeitung vorgesehen.

Ferner wird vorgeschlagen, dass die zumindest eine Datenübertragungseinheit zu einer Datenübertragung von Buchungsdaten vorgesehen ist. Durch diese Ausgestaltung kann eine vorteilhaft automatisierte Verarbeitung einer Zubuchung erreicht werden. Dadurch kann eine vorteilhaft schnelle Bearbeitung von Buchungsdaten erreicht werden, wodurch ein Bedienkomfort und eine Nutzerzufriedenheit vorteilhaft erhöht werden können. Die zumindest eine Recheneinheit ist insbesondere dazu vorgesehen, Buchungsdaten für mehrere Sitzvorrichtungen zu verarbeiten. Unter "Buchungsdaten" sollen insbesondere Daten verstanden werden, die Informationen darüber enthalten, ob für die zumindest eine individuelle Serviceleistung und/oder die zumindest eine Komforteigenschaft eine Zubuchung und/oder eine Abbuchung erfolgt ist. Vorzugsweise umfassen die Buchungsdaten wenigstens einen Freigabeindikator. Der wenigstens eine Freigabeindikator ist insbesondere dazu vorgesehen, eine elektrische und/oder elektromechanische Freischaltung der zumindest einen zugebuchten individuellen Serviceleistung und/oder der zumindest einen zugebuchten Komforteigenschaft zu bewirken. Vorzugsweise ist die Datenübertragung von Buchungsdaten verschlüsselt ausgebildet.

Zudem wird vorgeschlagen, dass das Sitzsystem die zumindest eine, insbesondere zentrale, Recheneinheit und die zumindest eine Datenübertragungseinheit aufweist, wobei die zumindest eine Recheneinheit und/oder die zumindest eine Datenübertragungseinheit zumindest eine weitere Funktion, insbesondere eine IFE-Funktion und/oder eine Sitzsteuerfunktion, neben einer Zubuchungs- und/oder Abbuchungsfunktion des Zubuchungs- und/oder Abbuchungssystems aufweist. Durch diese Ausgestaltung kann vorteilhaft ein Datenübertragungsweg für mehrere Zwecke verwendet werden. Vorteilhafterweise kann eine bereits vorhandene Datenübertragungseinheit auch zu einer Datenübertragung von Buchungsdaten genutzt werden. Durch diese Ausgestaltung können vorteilhaft Bauraum und Gewicht eingespart werden. Dadurch können zudem Herstellungskosten und Wartungskosten eingespart werden. Unter einer "IFE-Funktion" soll insbesondere eine Funktion verstanden werden, die ein In-Flight-Entertainment für einen Nutzer bereitstellt, wobei Inhalte aus dem In-Flight-Entertainment von dem Nutzer entsprechend seines persönlichen Bedarfs abrufbar sind. Vorzugsweise stellt die IFE-Funktion dem Nutzer zumindest einen Film, zumindest eine Musik und/oder zumindest ein Spiel bereit. Bevorzugt ist die IFE-Funktion von dem Nutzer persönlich nutzbar. Unter einer "Sitzsteuerfunktion" soll insbesondere eine Funktion verstanden werden, die eine, insbesondere elektromechanische, Ansteuerung des zumindest einen Sitzes anhand einer Nutzereingabe ermöglicht, wobei der zumindest eine Sitz mittels der Ansteuerung verstellbar ist.

Das Sitzsystem weist zumindest eine Kommunikationsschnittstelle auf, die dazu vorgesehen ist, eine Kommunikation zwischen einer Person und der zumindest einen Recheneinheit zu ermöglichen, wobei die zumindest eine individuelle Serviceleistung und/oder die zumindest eine Komforteigenschaft mittels der zumindest einen Kommunikationsschnittstelle zubuchbar und/oder abbuchbar sind/ist. Durch diese Ausgestaltung kann eine vorteilhaft einfache Zubuchung und/oder Abbuchung ermöglicht werden. Dadurch kann eine Zubuchung und/oder eine Abbuchung vorteilhaft direkt und zeitlich unabhängig von dem Nutzer getätigt werden, ohne mit einem Personal interagieren zu müssen. Durch diese Ausgestaltung kann ein Wohlbefinden des Nutzers vorteilhaft erhöht werden. Vorzugsweise ist die zumindest eine Kommunikationsschnittstelle dazu vorgesehen, Informationen über eine Zubuchung und/oder über eine Abbuchung bereitzustellen und/oder eine Zubuchung und/oder eine Abbuchung durch einen Nutzer zu ermöglichen. Vorzugsweise ist die zumindest eine Kommunikationsschnittstelle in der zumindest einen Sitzvorrichtung angeordnet. Besonders bevorzugt ist die zumindest eine Kommunikationsschnittstelle Teil der zumindest einen Sitzvorrichtung. Grundsätzlich kann die zumindest eine Kommunikationsschnittstelle auch als eine zentrale Kommunikationsschnittstelle, insbesondere in dem Transportmittel, ausgebildet sein.

Die zumindest eine Kommunikationsschnittstelle ist als ein PED ausgebildet. Durch diese Ausgestaltung kann eine vorteilhaft komfortable Zubuchung und/oder Abbuchung erfolgen, da der Nutzer die Zubuchung und/oder die Abbuchung tätigen kann, ohne die zumindest eine Sitzvorrichtung zu verlassen. Eine Zubuchung und/oder eine Abbuchung kann durch diese Ausgestaltung vorteilhaft mit dem eigenen, bekannten PED durchgeführt werden. Durch die Ausgestaltung können dem Nutzer zudem individuelle Angebote unterbreitet werden, die auf den Nutzer abgestimmt sind. Unter einem "PED" soll insbesondere ein persönliches elektronisches Gerät (Personal Electronic Device) eines Nutzers verstanden werden. Das PED ist insbesondere dazu vorgesehen, mit der zumindest einen Recheneinheit gekoppelt zu werden. Die zumindest eine Steuerfunktion ist insbesondere dazu vorgesehen, die zumindest eine Sitzvorrichtung anzusteuern. Grundsätzlich kann die zumindest eine Kommunikationsschnittstelle auch als eine Fernbedienung der zumindest einen Sitzvorrichtung ausgebildet sein. Dabei wäre denkbar, dass das PED als eine Fernbedienung für einen Bildschirm ausgebildet ist. Grundsätzlich kann die zumindest eine Kommunikationsschnittstelle auch als eine Antenne, insbesondere eine Bluetooth-Antenne, ausgebildet sein. Vorzugsweise umfasst das PED zumindest eine Applikation, die zumindest dazu vorgesehen ist, Buchungsdaten zu empfangen, zu speichern, zu verarbeiten und/oder zu senden. Bevorzugt umfasst die zumindest eine Applikation eine Buchungsfunktion für den Transport und eine Zubuchungs- und/oder Abbuchungsfunktion zu einer Zubuchung und/oder einer Abbuchung der zumindest einen individuellen Serviceleistung und/oder der zumindest einen Komforteigenschaft. Vorzugsweise sind Daten der zumindest einen Applikation auf dem PED gespeichert. Dadurch kann eine vorteilhaft betriebssichere Nutzung der Applikation sichergestellt werden, da Daten unabhängig von einer Internetverbindung des PED verfügbar sind. Bevorzugt ist das PED dazu vorgesehen, Daten, insbesondere Buchungsdaten, mit der zumindest einen Recheneinheit über die zumindest eine Datenübertragungseinheit auszutauschen. Durch diese Ausgestaltung können Buchungsdaten von dem PED an die zumindest eine Recheneinheit, insbesondere die zumindest eine zentrale Recheneinheit oder die zumindest eine dezentrale Recheneinheit, vorteilhaft einfach mittels der zumindest einen Applikation übertragen werden. Dadurch kann eine vorteilhaft einfache und benutzerfreundliche Datenerfassung ermöglicht werden, da nutzerspezifische Buchungsdaten automatisch von einem nutzerspezifischen PED erfasst werden können.

Zudem wird vorgeschlagen, dass die individuelle Serviceleistung als eine Personenkommunikationsdienstleistung ausgebildet ist. Durch diese Ausgestaltung kann eine vorteilhaft einfache und diskrete Möglichkeit bereitgestellt werden, gemeinsame Bedürfnisse mehrerer Nutzer zu erkennen. Unter einer "Personenkommunikationsdienstleistung" soll insbesondere eine Dienstleistung verstanden werden, die dazu vorgesehen ist, eine Kommunikation zwischen zumindest zwei Personen zu ermöglichen, um wenigstens ein gemeinsames Bedürfnis der zumindest zwei Personen zu erkennen und/oder auszuwerten. Vorzugsweise ist die Personenkommunikationsdienstleistung dazu vorgesehen, den zumindest zwei Personen wenigstens ein Angebot für das wenigstens eine gemeinsame Bedürfnis bereitzustellen oder das wenigstens eine gemeinsame Bedürfnis an einen Dienstleister weiterzuleiten. Bevorzugt umfasst die Personenkommunikationsdienstleistung eine Chatfunktion und/oder eine Telefonfunktion, wobei die Chatfunktion und/oder die Telefonfunktion insbesondere zu einer Kommunikation innerhalb des Transportmittels vorgesehen sind. Besonders bevorzugt ist die Personenkommunikationsdienstleistung als eine indirekte Kommunikation ausgebildet. Unter einer "indirekten Kommunikation" soll insbesondere eine Kommunikation verstanden werden, bei der die Nutzer nicht direkt miteinander kommunizieren, sondern lediglich Informationen über die Nutzer und/oder die Bedürfnisse der Nutzer ausgetauscht werden. Unter einem "Bedürfnis" soll insbesondere ein Wunsch nach einer bestimmten Dienstleistung verstanden werden. Vorzugsweise ist das Bedürfnis als eine Taxifahrt, als ein Hotelaufenthalt, als eine Aktivität und/oder als eine Reisepartnerschaft ausgebildet. Vorzugsweise weist die Personenkommunikationsdienstleistung eine Match-Funktion auf, die dazu vorgesehen ist, gemeinsame Interessen und/oder Bedürfnisse mehrerer Nutzer auszuwerten. Die Match-Funktion ist insbesondere dazu vorgesehen, anhand von Informationen, die durch den Nutzer bereitgestellt werden, Gemeinsamkeiten mit persönlichen Interessen und/oder Bedürfnissen weiterer Nutzer zu erkennen. Vorzugsweise ist die Match-Funktion dazu vorgesehen, Nutzer mit gemeinsamen persönlichen Interessen und/oder Bedürfnissen gegenseitig über die zumindest eine Kommunikationsschnittstelle bekanntzugeben. Unter einer "Personenkommunikationsdienstleistung" soll insbesondere kein In-Flight-Entertainment, insbesondere keine Telefonfunktion zu einer Kommunikation über das Transportmittel hinaus und insbesondere keine Internetfunktion verstanden werden.

Die zumindest eine Sitzvorrichtung umfasst wenigstens eine verstellbare Sitzfunktionseinheit, welche die zumindest eine zubuchbare und/oder abbuchbare Komforteigenschaft umfasst und welche zumindest einen Standardbetriebszustand und zumindest einen weiteren Betriebszustand aufweist, wobei die wenigstens eine Sitzfunktionseinheit dazu vorgesehen ist, bei einer Zubuchung und/oder Abbuchung der zumindest einen Komforteigenschaft in den zumindest einen weiteren Betriebszustand verstellt zu werden. Durch diese Ausgestaltung kann vorteilhaft ein nutzerspezifischer Funktions- und/oder Leistungsumfang bereitgestellt werden. Dadurch kann ein Nutzer vorteilhaft bedarfsgerecht Komforteigenschaften hinzubuchen und/oder abbuchen. Unter einem "Standardbetriebszustand" einer Sitzfunktionseinheit soll insbesondere ein Betriebszustand verstanden werden, der standardmäßig ohne eine Zubuchung der zumindest einen zubuchbaren Komforteigenschaft eingestellt ist. Unter einem "weiteren Betriebszustand" einer Sitzfunktionseinheit soll insbesondere ein Betriebszustand verstanden werden, der bei einer Zubuchung der zumindest einen zubuchbaren Komforteigenschaft einstellbar ist. Besonders bevorzugt steht die zumindest eine Komforteigenschaft in dem zumindest einen weiteren Betriebszustand dem Nutzer zur Verfügung. Unter "verstellbar" soll insbesondere verstanden werden, dass eine Position der Sitzfunktionseinheit und/oder ein Funktionsumfang der Sitzfunktionseinheit durch eine Zubuchung veränderbar ist.

Ferner wird vorgeschlagen, dass die wenigstens eine Sitzfunktionseinheit zumindest im Wesentlichen von einer mechanischen Komponente gebildet ist, wobei die mechanische Komponente dazu vorgesehen ist, bei einer Zubuchung der zumindest einen Komforteigenschaft in den zumindest einen weiteren Betriebszustand bewegt zu werden.

Durch diese Ausgestaltung kann vorteilhaft eine zubuchbare und/oder abbuchbare mechanische Komponente bereitgestellt werden. Dadurch kann ein Nutzer vorteilhaft bedarfsgerecht Komforteigenschaften hinzubuchen. Unter einer "mechanischen Komponente" soll insbesondere eine Komponente verstanden werden, die manuell und/oder elektrisch ansteuerbar ist und über zumindest eine Lagerstelle der mechanischen Komponente zwischen dem zumindest einen Standardbetriebszustand und dem zumindest einen weiteren Betriebszustand bewegbar ist. Vorzugsweise weist die mechanische Komponente wenigstens ein Schwenklager und/oder wenigstens ein Linearlager auf.

Zudem wird vorgeschlagen, dass die mechanische Komponente als eine Rückenlehne, als eine Armlehne, als eine Kopfstütze, als ein Sitzboden, als eine Beinstütze, als eine Fußstütze, als eine Tischeinheit, als ein PED-Halter, als ein Getränkehalter, als eine Verstaueinheit, als eine Türeinheit und/oder als ein Sichtschutzelement ausgebildet ist. Durch diese Ausgestaltung kann der Nutzer vorteilhaft an der zumindest einen Sitzvorrichtung verfügbare Komforteigenschaften zubuchen, die mechanisch bewegbar sind. Damit kann vorteilhaft ein nutzerspezifischer Funktionsumfang bereitgestellt werden. Vorzugsweise weist der Sitzboden zumindest zwei unterschiedliche Sitzhärten auf, welche einstellbar sind. Vorzugsweise ist die Verstaueinheit als ein Verstaufach, eine Verstauschublade und/oder ein Verstauschrank ausgebildet. Vorzugsweise weist die Türeinheit wenigstens eine Sichtschutzeinheit auf, die dazu vorgesehen ist, den wenigstens einen Sitzbereich der zumindest einen Sitzvorrichtung von einem Gang des Transportmittels und/oder von einem benachbarten Sitzbereich einer weiteren Sitzvorrichtung zumindest optisch abzutrennen. Das Sichtschutzelement ist insbesondere dazu vorgesehen, den wenigstens einen Sitzbereich der zumindest einen Sitzvorrichtung teilweise von dem Gang des Transportmittels, von einem benachbarten Sitzbereich der zumindest einen Sitzvorrichtung und/oder von dem benachbarten Sitzbereich der weiteren Sitzvorrichtung abzutrennen.

Des Weiteren wird vorgeschlagen, dass die wenigstens eine Sitzfunktionseinheit als ein Bildschirm, als ein Beleuchtungselement, als ein Stromanschluss, als ein Massagesystem und/oder als eine Sitzheizung ausgebildet ist. Durch diese Ausgestaltung kann der Nutzer vorteilhaft an der zumindest einen Sitzvorrichtung verfügbare Komforteigenschaften zubuchen und/oder abbuchen, die elektrisch verstellbar sind. Damit kann vorteilhaft ein nutzerspezifischer Funktionsumfang bereitgestellt werden. Vorzugsweise sind der Bildschirm, das Beleuchtungselement, der Stromanschluss, das Massagesystem und/oder die Sitzheizung elektronisch verstellbar ausgebildet. Die als Bildschirm ausgebildete wenigstens eine Sitzfunktionseinheit ist vorzugsweise als die zumindest eine als Bildschirm ausgebildete Kommunikationsschnittstelle ausgebildet. Vorzugsweise ist der Bildschirm zumindest dazu vorgesehen, die IFE-Funktion und/oder die Sitzsteuerfunktion visuell darzustellen. Vorzugsweise ist die Sitzsteuerfunktion zu einer elektromechanischen Ansteuerung der zumindest einen mechanischen Komponente der wenigstens einen Sitzfunktionseinheit vorgesehen. Das Beleuchtungselement ist insbesondere als eine Leselampe ausgebildet. Grundsätzlich kann das Beleuchtungselement auch ein farbiges Stimmungslicht bereitstellen. Vorzugsweise ist der Stromanschluss als eine Steckdose ausgebildet. Der Stromanschluss ist insbesondere dazu vorgesehen, elektrische Energie für ein PED bereitzustellen.

Das Zubuchungs- und/oder Abbuchungssysten weist zumindest eine elektromechanische Freigabeeinheit auf, die dazu vorgesehen ist, die wenigstens eine Sitzfunktionseinheit freizugeben. Durch diese Ausgestaltung kann eine zugebuchte Komforteigenschaft vorteilhaft freigeschalten werden. Dadurch kann vorteilhaft eine automatisierte Freigabe der wenigstens einen Sitzfunktionseinheit nach einer Zubuchung erfolgen. Durch diese Ausgestaltung kann eine Interaktion mit dem Personal vorteilhaft vermieden werden, wodurch eine Arbeitsbelastung für das Personal vorteilhaft reduziert werden kann und der Nutzer vorteilhaft zumindest im Wesentlichen keine Wartezeit bis zu einer Freigabe der wenigstens einen Sitzfunktionseinheit erlebt. Vorzugsweise ist die zumindest eine Freigabeeinheit an der zumindest einen Sitzvorrichtung, insbesondere an der wenigstens einen Sitzfunktionseinheit, angeordnet. Vorzugsweise umfasst das Zubuchungs- und/oder Abbuchungssystem zumindest eine Steuereinheit, die in zumindest einem Betriebszustand dazu vorgesehen ist, die zumindest eine Freigabeeinheit anzusteuern. Vorzugsweise ist die zumindest eine Steuereinheit mit der Recheneinheit gekoppelt. Besonders bevorzugt ist die zumindest eine Steuereinheit zentral angeordnet oder in der zumindest einen Sitzvorrichtung angeordnet. Besonders bevorzugt weist die zumindest eine Freigabeeinheit wenigstens ein Freigabeelement auf. Das zumindest eine Freigabeelement ist insbesondere dazu vorgesehen, eine Bewegung der wenigstens einen Sitzfunktionseinheit zwischen der Standardbetriebsstellung und der zumindest einen weiteren Betriebsstellung in zumindest einem Betriebszustand zu verhindern. Vorzugsweise ist das wenigstens eine Freigabeelement als ein Bolzen, als ein Haken, als ein Riegel und/oder als eine Klemme ausgebildet. Vorzugsweise weist die zumindest eine Freigabeeinheit wenigstens einen Aktuator auf. Der wenigstens eine Aktuator umfasst vorzugsweise zumindest einen Motor, insbesondere einen Elektromotor, zumindest ein Federelement und/oder zumindest einen Magneten. Das wenigstens eine Freigabeelement ist insbesondere mittels des wenigstens einen Aktuators betätigbar. Besonders bevorzugt weist die wenigstens eine Sitzfunktionseinheit zumindest ein korrespondierend zu dem wenigstens einen Freigabeelement ausgebildetes Sperrelement auf. Besonders bevorzugt sind das wenigstens eine Freigabeelement und das zumindest eine Sperrelement in zumindest einem Betriebszustand beweglich zueinander gelagert. Vorzugsweise ist das wenigstens eine Freigabeelement mit dem zumindest einen Sperrelement in der Standardbetriebsstellung unbeweglich gekoppelt. Vorzugsweise weist das wenigstens eine Freigabeelement zumindest zwei Betriebszustände auf. In einem ersten Betriebszustand ist das wenigstens eine Freigabeelement vorzugsweise mit dem zumindest einen Sperrelement gekoppelt. Vorzugsweise ist das wenigstens eine Freigabeelement in dem weiteren Betriebszustand von dem zumindest einen Sperrelement entkoppelt. Bevorzugt ist die wenigstens eine Sitzfunktionseinheit in dem weiteren Betriebszustand hinzugebucht und freigegeben. Vorzugsweise weist die zumindest eine Freigabeeinheit wenigstens ein Sensorelement auf. Das wenigstens eine Sensorelement ist insbesondere dazu vorgesehen, eine Stellung der wenigstens einen Sitzfunktionseinheit zu sensieren. Vorzugsweise ist das wenigstens eine Sensorelement dazu vorgesehen, den ersten Betriebszustand und den weiteren Betriebszustand zu detektieren. Dadurch kann vorteilhaft eine Nutzung von hinzugebuchten und/oder abgebuchten Sitzfunktionseinheiten erfasst und ausgewertet werden. Dadurch kann vorteilhaft eine statistische Auswertung erstellt werden, die Daten über eine Nutzungsdauer und/oder eine Nutzungshäufigkeit der zumindest einen Sitzfunktionseinheit umfasst. Das wenigstens eine Sensorelement kann beispielsweise an oder in dem wenigstens einen Freigabeelement angeordnet sein. Bevorzugt ist das wenigstens eine Sensorelement mit der zumindest einen Recheneinheit und/oder mit der zumindest einen Steuereinheit verbunden.

Zudem wird vorgeschlagen, dass die zumindest eine Freigabeeinheit wenigstens ein Freigabeelement aufweist, das zumindest teilweise aus einer Formgedächtnislegierung gebildet ist. Durch diese Ausgestaltung kann vorteilhaft eine wartungsfreundliche Freigabeeinheit bereitgestellt werden. Durch die Ausgestaltung kann ein Freigabeelement mit einem vorteilhaft geringen Bauraumbedarf bereitgestellt werden. Vorzugsweise ist das wenigstens eine Freigabeelement, das zumindest teilweise aus einer Formgedächtnislegierung gebildet ist, durch Ansteuerung mit einem Strom dazu vorgesehen, seine Form zu ändern, wobei das wenigstens eine Freigabeelement bei einer gleichen Ansteuerung mit Strom immer dieselbe Position einnimmt. Unter einer "Formgedächtnislegierung" soll insbesondere eine Metalllegierung verstanden werden, die in zwei unterschiedlichen Gitterstrukturen existieren kann, wodurch sich das wenigstens eine zumindest teilweise aus einer Formgedächtnislegierung gebildete Freigabeelement nach einer starken Verformung durch eine Einwirkung insbesondere von Wärme ohne weiteren Einfluss von außen wieder in seine frühere Formgebung zurück verformt. Vorzugsweise bewirkt die Ansteuerung mit Strom eine Temperaturänderung der Formgedächtnislegierung. Grundsätzlich wäre es auch denkbar, dass die Formgedächtnislegierung durch wenigstens ein Magnetfeld beeinflussbar ausgebildet ist. Alternativ kann das wenigstens eine Freigabeelement auch als ein Elektromotor ausgebildet sein.

Des Weiteren wird vorgeschlagen, dass das Sitzsystem zumindest eine Datenübertragungseinheit, insbesondere die zuvor genannte zumindest eine Datenübertragungseinheit, aufweist, die zumindest dazu vorgesehen ist, Buchungsdaten von zumindest einem externen Gerät, insbesondere einem Server und/oder einer Cloud, zu empfangen. Durch diese Ausgestaltung können vorteilhaft Buchungsdaten von außerhalb des Transportmittels, insbesondere des Flugzeugs, übertragen werden. Dadurch wird vorteilhaft ermöglicht, dass eine Zubuchung und/oder eine Abbuchung von individuellen Serviceleistungen und/oder Komforteigenschaften bereits vor dem Transport erfolgen kann. Dadurch kann ein Komfort für den Nutzer vorteilhaft verbessert werden. Durch die Ausgestaltung kann vorteilhaft erreicht werden, dass vorbestimmte Buchungsdaten für den Nutzer, insbesondere einen Stammkunden, übertragen werden, sodass eine Zubuchung und/oder eine Abbuchung nicht bei jedem Transport individuell erfolgen muss. Grundsätzlich kann eine Zubuchung und/oder eine Abbuchung bereits bei einer Buchung eines Tickets für das Transportmittel und/oder bei einer Abfertigung des Nutzers erfolgen. Unter einer "Abfertigung" soll insbesondere ein Check-In-Vorgang, ein Wartevorgang und/oder ein Boarding-Vorgang verstanden werden. Vorzugsweise ist die Datenübertragungseinheit dazu vorgesehen, Buchungsdaten über einen Satelliten und/oder über ein Abfertigungsgebäude, insbesondere ein Flughafengebäude, auszutauschen.

Ferner wird vorgeschlagen, dass das Zubuchungs- und/oder Abbuchungssystem zumindest eine Identifikationseinheit umfasst, die dazu vorgesehen ist, eine korrekte Zuordnung eines Identifikationsmittels, insbesondere einer Bordkarte, zu der zumindest einen Sitzvorrichtung zu prüfen. Durch diese Ausgestaltung kann vorteilhaft überprüft werden, ob sich ein Inhaber der Bordkarte bei der ihm zugewiesenen oder bei der von ihm ausgewählten Sitzvorrichtung befindet. Dadurch kann vorteilhaft sichergestellt werden, dass die zumindest eine zugebuchte individuelle Serviceleistung und/oder die zumindest eine zugebuchte Komforteigenschaft, dem Nutzer an der aktuellen Sitzvorrichtung bereitgestellt wird. Gleichzeitig kann vorteilhaft verhindert werden, dass eine Zubuchung einem anderen Nutzer zugutekommt oder eine Abbuchung einen anderen Nutzer versehentlich einschränkt. Dadurch kann vorteilhaft eine Nutzerzufriedenheit erhöht werden. Besonders bevorzugt weist die Bordkarte einen optischen Code auf, der von der zumindest einen Identifikationseinheit erfassbar ist. Bevorzugt ist der optische Code als ein Barcode oder als ein QR-Code ausgebildet. Vorzugsweise ist die Bordkarte als eine elektronische Bordkarte ausgebildet. Die elektronische Bordkarte ist insbesondere als ein elektronischer Datensatz ausgebildet. Die Bordkarte kann insbesondere auf dem PED des Nutzers abbildbar sein. Grundsätzlich kann das Identifikationsmittel auch als ein Ausweisdokument, als eine Kundenkarte und/oder als eine Kreditkarte ausgebildet sein. Vorzugsweise ist die elektronische Bordkarte drahtlos an die zumindest eine Identifikationseinheit übertragbar, insbesondere mittels Nahfeldkommunikation, Bluetooth und/oder WLAN. Alternativ ist die elektronische Bordkarte auch kabelgebunden, insbesondere mittels eines mit dem PED koppelbaren USB-Kabels, von dem PED an die zumindest eine Identifikationseinheit übertragbar, insbesondere über einen USB-Anschluss der zumindest einen Identifikationseinheit.

Zudem wird vorgeschlagen, dass das Zubuchungs- und/oder Abbuchungssystem zumindest eine Bezahlungseinheit umfasst, die zu einer Bezahlung einer Zubuchung von der zumindest einen individuellen Serviceleistung und/oder der zumindest einen Komforteigenschaft vorgesehen ist. Durch diese Ausgestaltung kann eine Bezahlung einer Zubuchung vorteilhaft sofort durch den Nutzer ermöglicht werden. Dadurch steht die zumindest eine individuelle Serviceleistung und/oder die zumindest eine Komforteigenschaft dem Nutzer sofort ohne eine Interaktion mit dem Personal zur Verfügung. Bevorzugt ist die zumindest eine Bezahlungseinheit mit der zumindest einen Recheneinheit gekoppelt. Vorzugsweise ist die zumindest eine Bezahlungseinheit in der zumindest einen Sitzvorrichtung angeordnet. Vorzugsweise weist die zumindest eine Bezahlungseinheit wenigstens eine Funkschnittstelle auf. Die wenigstens eine Funkschnittstelle ist insbesondere als eine Nahfeldkommunikationsschnittstelle und/oder als eine Bluetooth-Kommunikationsschnittstelle ausgebildet. Die wenigstens eine Funkschnittstelle ist zu einer Übertragung von Bezahlungsdaten zwischen dem PED und der zumindest einen Recheneinheit vorgesehen. Vorzugsweise wird ein Bezahlungsvorgang mittels des PED durchgeführt. Vorzugsweise ist das PED dazu vorgesehen, zumindest eine mobile Bezahlungsapplikation, insbesondere Apple Pay^{®}, Google Pay^{™} und/oder eine andere, dem Fachmann als geeignet erscheinende Applikation, auszuführen. Alternativ oder zusätzlich kann die zumindest eine Bezahlungseinheit auch einen Kartenleser aufweisen. Der Kartenleser ist insbesondere dazu vorgesehen, eine Kreditkarte und/oder eine Kundenkarte auszulesen. Grundsätzlich kann die zumindest eine Bezahlungseinheit auch als eine zentrale Bezahlungseinheit, insbesondere in dem Transportmittel, ausgebildet sein. Grundsätzlich kann die zumindest eine Bezahlungseinheit auch dazu vorgesehen sein, bei einer Abbuchung der zumindest einen individuellen Serviceleistung und/oder der zumindest einen Komforteigenschaft eine Gutschrift durchzuführen.

Des Weiteren wird vorgeschlagen, dass das Zubuchungs- und/oder Abbuchungssystem zumindest eine Ausgabeeinheit umfasst, die dazu vorgesehen ist, Buchungsdaten für die zumindest eine Sitzvorrichtung auszugeben. Durch diese Ausgestaltung können Buchungsdaten vorteilhaft an das Personal, insbesondere eine Crew, ein Reinigungspersonal und/oder ein Wartungspersonal, ausgegeben werden. Dadurch wird während einer Abfertigung des Transportmittels vorteilhaft ermöglicht, dass lediglich zugebuchte Sitzfunktionseinheiten geprüft und/oder gereinigt werden müssen. Beispielsweise kann durch diese Ausgestaltung vorteilhaft ermöglicht werden, dass lediglich Tischeinheiten gereinigt werden müssen, die während des Transports genutzt wurden. Tischeinheiten, die während des Transports nicht genutzt wurden, müssen vorteilhaft nicht gereinigt werden. Dadurch kann vorteilhaft eine Abfertigungsdauer des Transportmittels reduziert werden. Bevorzugt weist die Ausgabeeinheit einen Personalbildschirm und/oder einen Drucker auf.

Ferner wird die Sitzvorrichtung, insbesondere die Flugzeugsitzvorrichtung, für das Sitzsystem vorgeschlagen. Durch diese Ausgestaltung kann ein vorteilhaft nutzerfreundliches Sitzsystem bereitgestellt werden.

Zudem wird ein Verfahren zum Betrieb des Sitzsystems vorgeschlagen. Durch diese Ausgestaltung kann der Nutzer durch eine Zubuchung und/oder eine Abbuchung vorteilhaft einen persönlichen nutzerspezifischen Funktions- und/oder Leistungsumfang auswählen.

Das erfindungsgemäße Sitzsystem soll hierbei nicht auf die oben beschriebene Anwendung und Ausführungsform beschränkt sein. Insbesondere kann das erfindungsgemäße Sitzsystem zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Transportmittel mit einem erfindungsgemäßen Sitzsystem in einer schematischen Seitenansicht,
- Fig. 2: das Transportmittel mit dem erfindungsgemäßen Sitzsystem in einer schematischen Draufsicht,
- Fig. 3: eine erste Sitzvorrichtung in einer schematischen Darstellung,
- Fig. 4: die erste Sitzvorrichtung in einer schematischen Darstellung,
- Fig. 5: eine zweite Sitzvorrichtung in einer schematischen Darstellung und
- Fig. 6: ein Verfahren zum Betrieb des erfindungsgemäßen Sitzsystems.

### Beschreibung des Ausführungsbeispiels

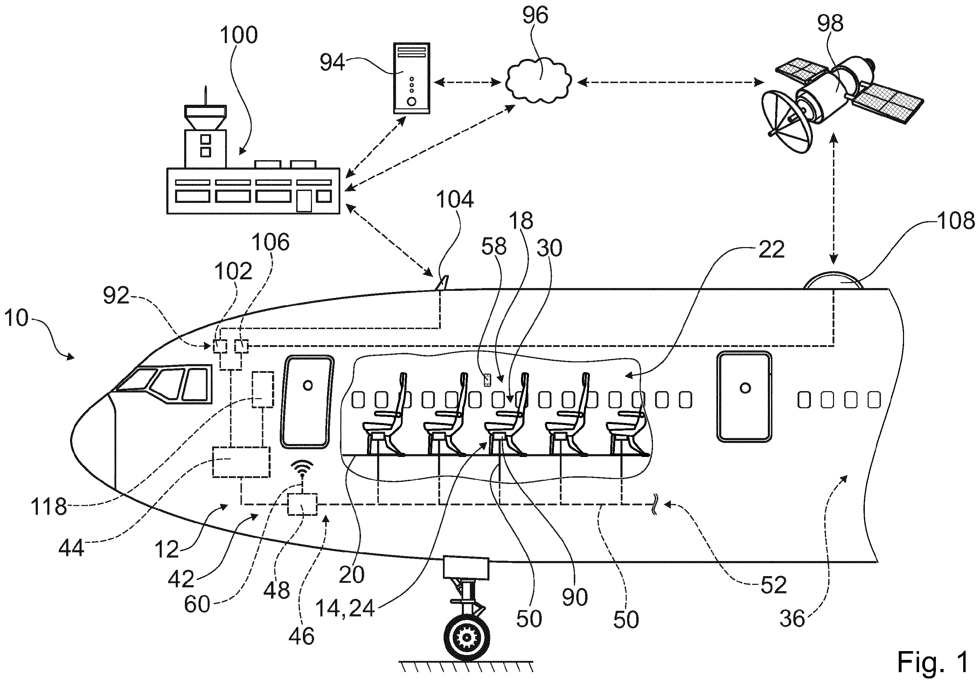

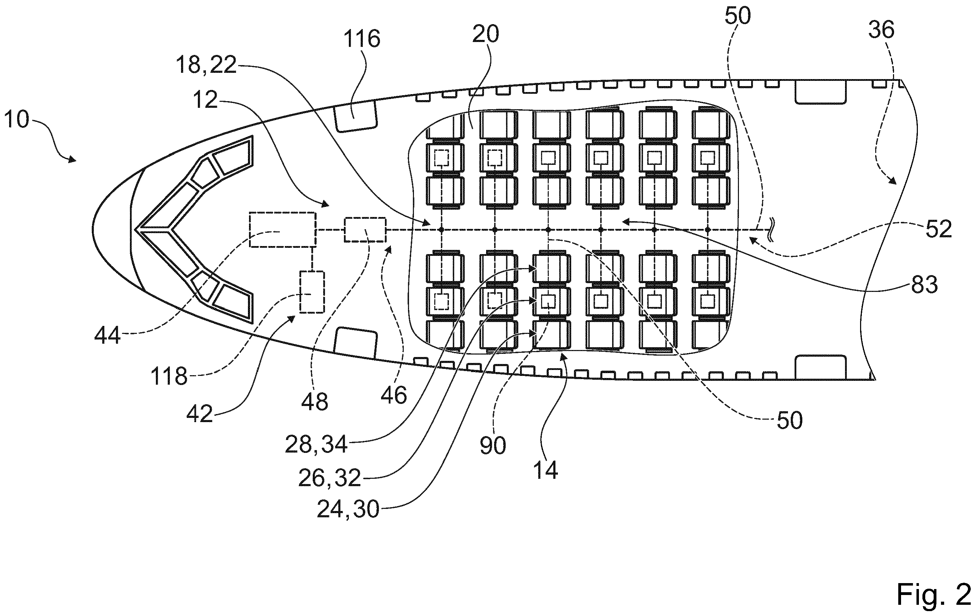

In den Figuren 1 und 2 ist ein Transportmittel 10 mit einem Sitzsystem 12 gezeigt. Das Transportmittel 10 ist als ein Flugzeug ausgebildet. Das Sitzsystem 12 ist zu einem Einsatz in dem Transportmittel 10 vorgesehen. Das Transportmittel 10 umfasst das Sitzsystem 12.

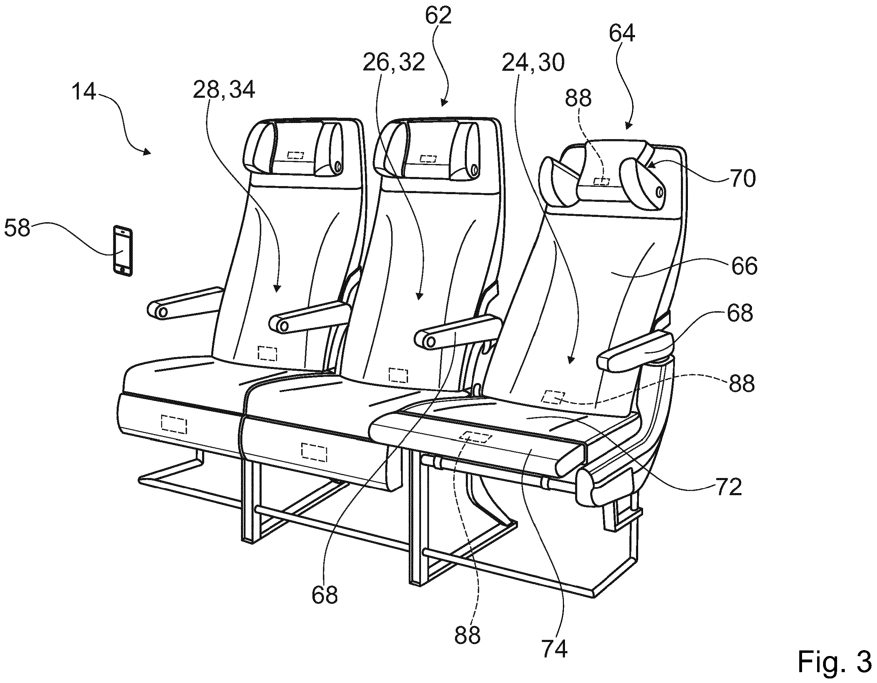

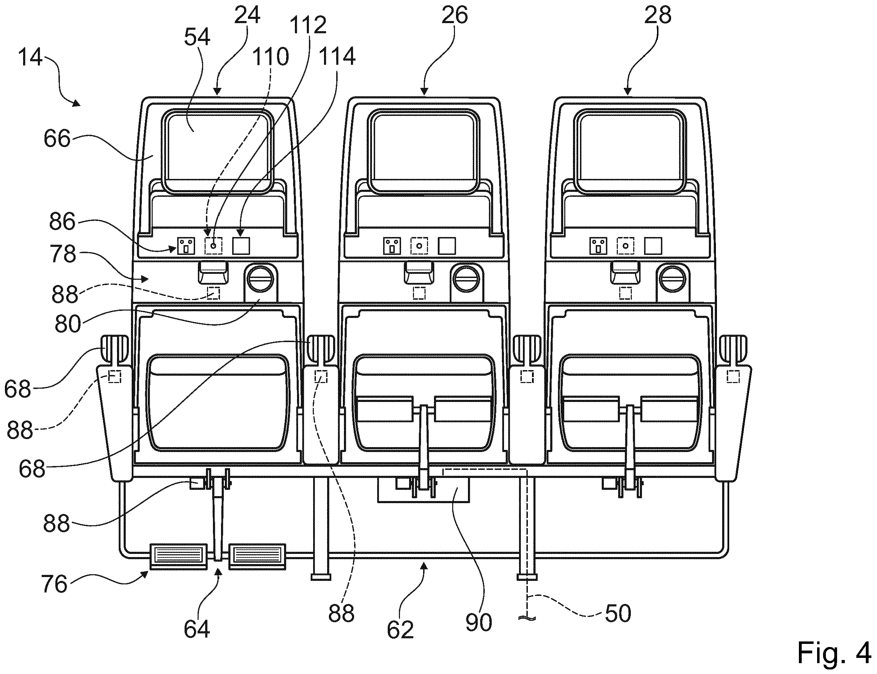

Das Sitzsystem 12 ist als ein Flugzeugsitzsystem ausgebildet. Das Sitzsystem 12 weist im vorliegenden Fall eine Vielzahl von Sitzvorrichtungen 14, 16 auf. Die Sitzvorrichtungen 14, 16 sind in einer Kabine 18 des Transportmittels 10 angeordnet. Die Sitzvorrichtungen 14, 16 sind auf einem Kabinenboden 20 des Transportmittels 10 aufgeständert. Das Sitzsystem 12 weist im vorliegenden Fall mehrere erste Sitzvorrichtungen 14 auf, die gleichartig ausgebildet sind. Die ersten Sitzvorrichtungen 14 sind in einem ersten Sitzabteil 22 des Sitzsystems 12 angeordnet. Die ersten Sitzvorrichtungen 14 umfassen jeweils drei Sitze 24, 26, 28 (Fig. 3 und 4). Die Sitze 24, 26, 28 der ersten Sitzvorrichtungen 14 sind jeweils als ein Economy-Class-Sitz ausgebildet. Die ersten Sitzvorrichtungen 14 bilden im vorliegenden Fall jeweils drei Sitzbereiche 30, 32, 34 aus. Jeder Sitzbereich 30, 32, 34 ist zu einem Aufenthalt eines Nutzers während eines Transports, insbesondere während eines Fluges, vorgesehen.

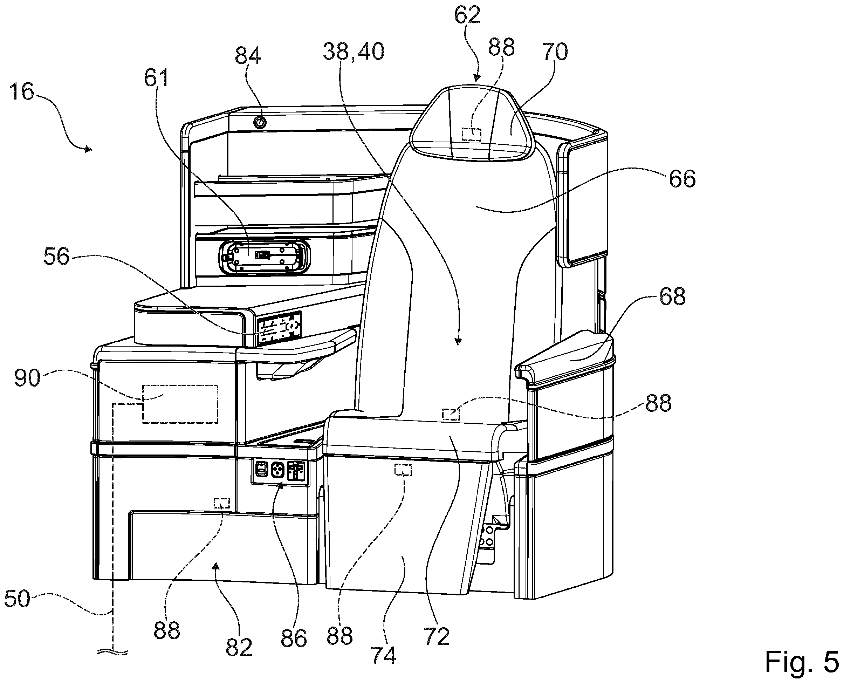

Das Sitzsystem 12 weist im vorliegenden Fall mehrere zweite Sitzvorrichtungen 16 auf, die gleichartig ausgebildet sind. Die zweiten Sitzvorrichtungen 16 sind in einem zweiten Sitzabteil 36 des Sitzsystems 12 angeordnet, wobei das zweite Sitzabteil 36 nicht näher dargestellt ist. Die zweiten Sitzvorrichtungen 16 sind in den Figuren 1 und 2 nicht dargestellt und sollen zum Verständnis für eine alternative Ausgestaltung der ersten Sitzvorrichtungen 14 dienen. Die zweiten Sitzvorrichtungen 16 umfassen jeweils einen Sitz 38 (Fig. 5). Der Sitz 38 der zweiten Sitzvorrichtungen 16 ist als ein Business-Class-Sitz ausgebildet. Die zweiten Sitzvorrichtungen 16 bilden im vorliegenden Fall jeweils einen Sitzbereich 40 aus.

Das Sitzsystem 12 weist ein Zubuchungs- und/oder Abbuchungssystem 42 auf (Fig. 1 und 2). Das Zubuchungs- und/oder Abbuchungssystem 42 ist zumindest teilweise dazu vorgesehen, mehrere individuelle Serviceleistungen und mehrere Komforteigenschaften zuzubuchen und/oder abzubuchen.

Das Sitzsystem 12 weist im vorliegenden Fall eine zentrale Recheneinheit 44 und eine Datenübertragungseinheit 46 auf, wobei die Datenübertragungseinheit 46 zumindest dazu vorgesehen ist, die Recheneinheit 44 mit den ersten Sitzvorrichtungen 14 und den zweiten Sitzvorrichtungen 16 für eine Datenübertragung kabelgebunden zu verbinden (Fig. 1). Grundsätzlich kann die Datenübertragungseinheit 46 auch zumindest dazu vorgesehen sein, die Recheneinheit 44 mit den ersten Sitzvorrichtungen 14 und den zweiten Sitzvorrichtungen 16 für eine Datenübertragung kabellos zu verbinden. Alternativ wäre auch denkbar, dass jeder Sitzvorrichtung 14, 16 oder jedem Sitz 24, 26, 28, 38 eine dezentrale Recheneinheit zugeordnet ist, wobei die dezentrale Recheneinheit zu einer sitzindividuellen Datenverarbeitung vorgesehen ist. Die Recheneinheit 44 ist mit den ersten Sitzvorrichtungen 14 und den zweiten Sitzvorrichtungen 16 verbunden. Die Recheneinheit 44 ist über die Datenübertragungseinheit 46 mit den ersten Sitzvorrichtungen 14 und den zweiten Sitzvorrichtungen 16 verbunden. Die Recheneinheit 44 ist dazu vorgesehen, Daten für die ersten Sitzvorrichtungen 14 und die zweiten Sitzvorrichtungen 16 zu verarbeiten. Die Recheneinheit 44 ist dazu vorgesehen, mit dem ersten Sitzabteil 22 und dem zweiten Sitzabteil 36 verbunden zu werden. Grundsätzlich wäre es auch denkbar, dass jeweils eine Recheneinheit für zumindest eine Sitzreihe und/oder für zumindest eine Sitzspalte bereitgestellt wird, um jeweils die zumindest eine Sitzreihe und/oder die zumindest eine Sitzspalte mit einer Recheneinheit zu verbinden. Die Datenübertragungseinheit 46 weist eine Sende- und/oder Empfangseinheit 48 und mehrere Datenkabel 50 auf. Die Datenkabel 50 sind jeweils als ein Netzwerkdatenkabel ausgebildet. Die Recheneinheit 44 ist kabelgebunden über die Datenkabel 50 mit den ersten Sitzvorrichtungen 14 und den zweiten Sitzvorrichtungen 16 verbunden. Die Recheneinheit 44 ist kabelgebunden über die Datenkabel 50 mittels eines Bus-Systems 52 mit den ersten Sitzvorrichtungen 14 und den zweiten Sitzvorrichtungen 16 verbunden. Das Bus-System 52 ist als ein CAN-Bus-System ausgebildet. Die Datenübertragung ist verschlüsselt ausgebildet. Die Datenübertragungseinheit 46 ist zu einer Datenübertragung von Buchungsdaten vorgesehen. Die Recheneinheit 44 ist dazu vorgesehen, Buchungsdaten für die ersten Sitzvorrichtungen 14 und die zweiten Sitzvorrichtungen 16 zu verarbeiten. Die Buchungsdaten umfassen wenigstens einen Freigabeindikator. Der wenigstens eine Freigabeindikator ist dazu vorgesehen, eine elektrische und/oder elektromechanische Freischaltung der zugebuchten individuellen Serviceleistungen und der zugebuchten Komforteigenschaften zu bewirken. Die Datenübertragung von Buchungsdaten ist verschlüsselt ausgebildet.

Die Recheneinheit 44 und die Datenübertragungseinheit 46 weisen eine weitere Funktion neben einer Zubuchungs- und/oder Abbuchungsfunktion des Zubuchungs- und/oder Abbuchungssystems 42 auf. Die weitere Funktion ist als eine IFE-Funktion oder als eine Sitzsteuerfunktion ausgebildet. Die IFE-Funktion stellt dem Nutzer zumindest einen Film, zumindest eine Musik und/oder zumindest ein Spiel bereit. Die IFE-Funktion ist von dem Nutzer persönlich nutzbar. Die Recheneinheit 44 weist eine nicht näher dargestellte Speichereinheit auf. Die Speichereinheit ist dazu vorgesehen, Buchungsdaten zu speichern. Die Speichereinheit ist dazu vorgesehen, IFE-Daten zu speichern. Die IFE-Daten sind als Filmdateien, Musikdateien und Spieldateien ausgebildet. Die Recheneinheit 44 ist dazu vorgesehen, IFE-Daten zu verarbeiten.

Das Sitzsystem 12 weist mehrere Kommunikationsschnittstellen auf (Fig. 3 bis 5). Die Kommunikationsschnittstellen sind jeweils dazu vorgesehen, eine Kommunikation zwischen einer Person und der Recheneinheit 44 zu ermöglichen, wobei die individuellen Serviceleistungen und die Komforteigenschaften mittels der Kommunikationsschnittstelle zubuchbar und/oder abbuchbar sind. Die Kommunikationsschnittstelle ist dazu vorgesehen, Informationen über eine Zubuchung und/oder über eine Abbuchung bereitzustellen und eine Zubuchung und/oder eine Abbuchung durch einen Nutzer zu ermöglichen. Die Kommunikationsschnittstellen sind in den ersten Sitzvorrichtungen 14 angeordnet. Die Kommunikationsschnittstellen sind Teil der ersten Sitzvorrichtungen 14. Die Kommunikationsschnittstellen sind in den zweiten Sitzvorrichtungen 16 angeordnet. Die Kommunikationsschnittstellen sind Teil der zweiten Sitzvorrichtungen 16. Grundsätzlich können die Kommunikationsschnittstellen auch als eine zentrale Kommunikationsschnittstelle in dem Transportmittel 10 ausgebildet sein. Die Kommunikationsschnittstellen sind jeweils als ein, nicht beanspruchter, Bildschirm 54 der ersten Sitzvorrichtung 14 ausgebildet. Die Kommunikationsschnittstellen sind jeweils als ein, nicht beanspruchter, Bildschirm 56 der zweiten Sitzvorrichtung 16 ausgebildet. Die Kommunikationsschnittstellen sind jeweils als ein PED 58 ausgebildet. Das PED 58 ist dazu vorgesehen, mit der Recheneinheit 44 gekoppelt zu werden. Das PED 58 wird mittels eines Pairingvorgangs mit der Recheneinheit 44 gekoppelt. Die Recheneinheit 44 ist im vorliegenden Fall kabellos über WLAN mit dem PED 58 verbunden. Grundsätzlich kann die Recheneinheit 44 auch kabellos über Bluetooth und/oder Nahfeldkommunikation mit dem PED 58 verbunden sein. Die Sende- und/oder Empfangseinheit 48 weist eine WLAN-Antenne 60 auf. Die Sende- und/oder Empfangseinheit 48 ist dazu vorgesehen, Daten über die WLAN-Antenne 60 mit dem PED 58 auszutauschen. Das PED 58 umfasst eine Applikation, die zumindest dazu vorgesehen ist, Buchungsdaten zu empfangen, zu speichern, zu verarbeiten und zu senden. Die Applikation umfasst eine Buchungsfunktion für den Transport und eine Zubuchungs- und/oder Abbuchungsfunktion zu einer Zubuchung und/oder einer Abbuchung der individuellen Serviceleistungen und der Komforteigenschaften. Daten der Applikation sind auf dem PED 58 gespeichert. Das PED 58 ist dazu vorgesehen, Buchungsdaten mit der Recheneinheit 44 über die Datenübertragungseinheit 46 auszutauschen. Der Bildschirm 54 ist zu einer visuellen Ausgabe der IFE-Funktion vorgesehen. Der Bildschirm 56 ist zu einer visuellen Ausgabe von einer Sitzsteuerfunktion vorgesehen. Die eine Sitzsteuerfunktion ist dazu vorgesehen, eine der zweiten Sitzvorrichtungen 16 anzusteuern. Der Bildschirm 54, 56 ist berührungsempfindlich ausgebildet. Der Bildschirm 54, 56 ist als ein Touchscreen ausgebildet. Grundsätzlich kann die Kommunikationsschnittstelle auch als eine Fernbedienung der ersten Sitzvorrichtungen 14 und/oder als eine Fernbedienung 61 der zweiten Sitzvorrichtungen 16 ausgebildet sein. Die Fernbedienung 61 ist im vorliegenden Fall zu einer Bedienung des In-Flight-Entertainments vorgesehen. Grundsätzlich wäre es denkbar, dass das PED 58 als eine Fernbedienung für den Bildschirm 54 ausgebildet ist. Grundsätzlich kann die Kommunikationsschnittstelle auch als eine Antenne, insbesondere eine Bluetooth-Antenne oder eine NFC-Antenne, ausgebildet sein.

Die individuellen Serviceleistungen sind als eine Verpflegung, als ein In-Flight-Entertainment, als ein Warenverkauf und als eine Personenkommunikationsdienstleistung ausgebildet. Die Personenkommunikationsdienstleistung ist dazu vorgesehen, zumindest zwei Personen wenigstens ein Angebot für wenigstens ein gemeinsames Bedürfnis bereitzustellen oder das wenigstens eine gemeinsame Bedürfnis an einen Dienstleister weiterzuleiten. Die Personenkommunikationsdienstleistung umfasst eine Chatfunktion und eine Telefonfunktion, wobei die Chatfunktion und die Telefonfunktion zu einer Kommunikation innerhalb des Transportmittels 10 vorgesehen sind. Die Personenkommunikationsdienstleistung ist als eine indirekte Kommunikation ausgebildet. Die Personenkommunikationsdienstleistung weist eine Match-Funktion auf, die dazu vorgesehen ist, gemeinsame Interessen und Bedürfnisse mehrerer Nutzer auszuwerten. Die Match-Funktion ist dazu vorgesehen, anhand von Informationen, die durch den Nutzer bereitgestellt werden, Gemeinsamkeiten mit persönlichen Interessen und Bedürfnissen weiterer Nutzer zu erkennen. Die Match-Funktion ist dazu vorgesehen, Nutzer mit gemeinsamen persönlichen Interessen und Bedürfnissen gegenseitig über die Kommunikationsschnittstellen bekanntzugeben.

Die ersten Sitzvorrichtungen 14 und die zweiten Sitzvorrichtungen 16 umfassen jeweils mehrere verstellbare Sitzfunktionseinheiten. Jede der Sitzfunktionseinheiten umfasst eine der mehreren zubuchbaren und/oder abbuchbaren Komforteigenschaften. Jede der Sitzfunktionseinheiten weist einen Standardbetriebszustand 62 und einen weiteren Betriebszustand 64 auf, wobei die Sitzfunktionseinheiten jeweils dazu vorgesehen sind, bei einer Zubuchung und/oder einer Abbuchung der Komforteigenschaft in den weiteren Betriebszustand 64 verstellt zu werden. Die Komforteigenschaft steht in dem weiteren Betriebszustand 64 dem Nutzer zur Verfügung.

Die Sitzfunktionseinheiten sind jeweils zumindest im Wesentlichen von einer mechanischen Komponente gebildet, wobei die mechanische Komponente dazu vorgesehen ist, bei einer Zubuchung der Komforteigenschaft in den weiteren Betriebszustand 64 bewegt zu werden. Die mechanische Komponente weist wenigstens ein nicht näher dargestelltes Schwenklager und/oder wenigstens ein nicht näher dargestelltes Linearlager auf. Die mechanischen Komponenten sind jeweils einem der Sitze 24, 26, 28, 38 zugeordnet. Die mechanische Komponente ist als eine Rückenlehne 66 ausgebildet. Die mechanische Komponente ist als eine Armlehne 68 ausgebildet. Die mechanische Komponente ist als eine Kopfstütze 70 ausgebildet. Die mechanische Komponente ist als ein Sitzboden 72 ausgebildet. Der Sitzboden 72 weist zumindest zwei unterschiedliche Sitzhärten auf, welche einstellbar sind. Die mechanische Komponente ist als eine Beinstütze 74 ausgebildet. Die mechanische Komponente ist als eine Fußstütze 76 ausgebildet. Die mechanische Komponente ist als eine Tischeinheit 78 ausgebildet. Die mechanische Komponente ist als ein nicht näher dargestellter PED-Halter ausgebildet. Die mechanische Komponente ist als ein Getränkehalter 80 ausgebildet. Die mechanische Komponente ist als eine Verstaueinheit 82 ausgebildet. Die Verstaueinheit 82 ist als ein Verstaufach ausgebildet. Grundsätzlich kann die Verstaueinheit 82 auch als eine Verstauschublade oder als ein Verstauschrank ausgebildet sein. Grundsätzlich kann die mechanische Komponente auch als eine Türeinheit ausgebildet sein. Die Türeinheit könnte wenigstens eine Sichtschutzeinheit aufweisen, die dazu vorgesehen ist, einen der Sitzbereiche 30, 32, 34, 40 einer der Sitzvorrichtungen 14, 16 von einem Gang 83 des Transportmittels 10 und/oder von einem benachbarten Sitzbereich 30, 32, 34, 40 einer weiteren Sitzvorrichtung 14, 16 zumindest optisch abzutrennen. Grundsätzlich kann die mechanische Komponente auch als ein Sichtschutzelement ausgebildet sein, welches dazu vorgesehen ist, einen der Sitzbereiche 30, 32, 34, 40 einer der Sitzvorrichtungen 14, 16 teilweise von dem Gang 83 des Transportmittels 10 und/oder von einem benachbarten Sitzbereich 30, 32, 34, 40 der weiteren Sitzvorrichtung 14, 16 abzutrennen. In der Figur 3 ist bei dem Sitz 26 der Standardbetriebszustand 62 der Rückenlehne 66, der Kopfstütze 70 und der Beinstütze 74 gezeigt. In der Figur 3 ist bei dem Sitz 24 der weitere Betriebszustand 64 der Rückenlehne 66, der Kopfstütze 70 und der Beinstütze 74 gezeigt. In der Figur 3 ist die Rückenlehne 66, die Kopfstütze 70 und die Beinstütze 74 bei dem Sitz 24 zugebucht. In der Figur 4 ist bei dem Sitz 26 der Standardbetriebszustand 62 der Fußstütze 76 gezeigt. In der Figur 4 ist bei dem Sitz 24 der weitere Betriebszustand 64 der Fußstütze 76 gezeigt. In der Figur 4 ist die Fußstütze 76 bei dem Sitz 24 zugebucht.

Die Sitzfunktionseinheit ist als der Bildschirm 54 ausgebildet. Der Bildschirm 54 ist elektronisch verstellbar ausgebildet. Die als Bildschirm 54 ausgebildete Sitzfunktionseinheit ist als die als Bildschirm 54 ausgebildete Kommunikationsschnittstelle ausgebildet. Der Bildschirm 54 ist zumindest dazu vorgesehen, die IFE-Funktion visuell darzustellen. Der Bildschirm 56 ist zumindest dazu vorgesehen, die Sitzsteuerfunktion visuell darzustellen. Die Sitzsteuerfunktion ist zu einer elektromechanischen Ansteuerung mehrerer mechanischer Komponenten der Sitzfunktionseinheiten in der zweiten Sitzvorrichtung 16 vorgesehen. Eine Benutzereingabe zu der Ansteuerung erfolgt mittels des Bildschirms 56. Der Bildschirm 56 ist als eine Benutzerschnittstelle zur Verstellung der Sitzvorrichtung 16 ausgebildet. Die Sitzfunktionseinheit ist als ein Beleuchtungselement 84 ausgebildet. Das Beleuchtungselement 84 ist elektronisch verstellbar ausgebildet. Das Beleuchtungselement 84 ist als eine Leselampe ausgebildet. Grundsätzlich kann das Beleuchtungselement 84 auch ein farbiges Stimmungslicht bereitstellen. Die Sitzfunktionseinheit ist als ein Stromanschluss 86 ausgebildet. Der Stromanschluss 86 ist elektronisch verstellbar ausgebildet. Der Stromanschluss 86 ist als eine Steckdose ausgebildet. Der Stromanschluss 86 ist dazu vorgesehen, elektrische Energie für das PED 58 bereitzustellen. Die Sitzfunktionseinheit ist als ein nicht näher dargestelltes Massagesystem ausgebildet. Das Massagesystem ist elektronisch verstellbar ausgebildet. Die Sitzfunktionseinheit ist als eine nicht näher dargestellte Sitzheizung ausgebildet. Die Sitzheizung ist elektronisch verstellbar ausgebildet.

Das Zubuchungs- und/oder Abbuchungssystem 42 weist mehrere elektromechanische Freigabeeinheiten 88 auf, die dazu vorgesehen sind, die Sitzfunktionseinheiten freizugeben. Die Freigabeeinheiten 88 sind an der ersten Sitzvorrichtung 14 und an der zweiten Sitzvorrichtung 16 angeordnet. Die Freigabeeinheiten 88 sind an den Sitzfunktionseinheiten angeordnet. Das Zubuchungs- und/oder Abbuchungssystem 42 umfasst mehrere Steuereinheiten 90, die in zumindest einem Betriebszustand dazu vorgesehen sind, die Freigabeeinheiten 88 anzusteuern. Die Steuereinheiten 90 sind mit der Recheneinheit 44 gekoppelt. Die Steuereinheiten 90 sind in den ersten Sitzvorrichtungen 14 und den zweiten Sitzvorrichtungen 16 angeordnet. Grundsätzlich wäre es auch denkbar, dass eine Steuereinheit zentral angeordnet ist. Die Freigabeeinheiten 88 weisen jeweils wenigstens ein nicht näher dargestelltes Freigabeelement auf. Das wenigstens eine Freigabeelement ist dazu vorgesehen, eine Bewegung der Sitzfunktionseinheit zwischen dem Standardbetriebszustand 62 und dem weiteren Betriebszustand 64 in zumindest einem Betriebszustand zu verhindern. Das wenigstens eine Freigabeelement ist als ein Bolzen, als ein Haken, als ein Riegel und/oder als eine Klemme ausgebildet. Die Freigabeeinheiten 88 weisen wenigstens einen nicht näher dargestellten Aktuator auf. Der wenigstens eine Aktuator umfasst zumindest einen Motor, insbesondere einen Elektromotor, zumindest ein Federelement und/oder zumindest einen Magneten. Das wenigstens eine Freigabeelement ist mittels des wenigstens einen Aktuators betätigbar. Die Sitzfunktionseinheiten weisen zumindest ein korrespondierend zu dem wenigstens einen Freigabeelement ausgebildetes Sperrelement auf. Das wenigstens eine Freigabeelement und das zumindest eine Sperrelement sind in zumindest einem Betriebszustand beweglich zueinander gelagert. Das wenigstens eine Freigabeelement ist mit dem zumindest einen Sperrelement in dem Standardbetriebszustand 62 unbeweglich gekoppelt. Das wenigstens eine Freigabeelement weist zumindest zwei Betriebszustände auf. In einem ersten Betriebszustand ist das wenigstens eine Freigabeelement mit dem zumindest einen Sperrelement gekoppelt. Das wenigstens eine Freigabeelement ist in dem weiteren Betriebszustand von dem zumindest einen Sperrelement entkoppelt. Die Sitzfunktionseinheiten sind in dem weiteren Betriebszustand hinzugebucht und freigegeben. Die Freigabeeinheiten 88 sind mit nicht näher dargestellten Kabeln mit den Steuereinheiten 90 verbunden. Grundsätzlich wäre es auch denkbar, dass die Freigabeeinheiten 88 kabellos mit den Steuereinheiten 90 verbunden sind. Die Freigabeeinheiten 88 weisen jeweils ein nicht näher dargestelltes Sensorelement auf. Das Sensorelement ist dazu vorgesehen, eine Stellung der jeweiligen Sitzfunktionseinheit zu sensieren. Das Sensorelement ist dazu vorgesehen, den Standardbetriebszustand 62 und den weiteren Betriebszustand 64 zu detektieren. Das Sensorelement ist beispielsweise an dem wenigstens einen Freigabeelement angeordnet. Das Sensorelement ist im vorliegenden Fall mit der Recheneinheit 44 verbunden.

Die Freigabeeinheiten 88 können wenigstens ein Freigabeelement aufweisen, das zumindest teilweise aus einer Formgedächtnislegierung gebildet ist. Das wenigstens eine Freigabeelement, das zumindest teilweise aus einer Formgedächtnislegierung gebildet ist, ist durch Ansteuerung mit einem Strom dazu vorgesehen, seine Form zu ändern, wobei das wenigstens eine Freigabeelement bei einer gleichen Ansteuerung mit Strom immer dieselbe Position einnimmt.

Das Sitzsystem 12 weist eine weitere Datenübertragungseinheit 92 auf, die zumindest dazu vorgesehen ist, Buchungsdaten von zwei externen Geräten 94, 96 zu empfangen. Grundsätzlich kann die weitere Datenübertragungseinheit 92 auch als die Datenübertragungseinheit 46 ausgebildet sein. Ein erstes externes Gerät 94 ist als ein Server ausgebildet. Ein zweites externes Gerät 96 ist als eine Cloud ausgebildet. Grundsätzlich kann eine Zubuchung und/oder eine Abbuchung bereits bei einer Buchung des Transportmittels 10 und/oder bei einer Abfertigung des Nutzers erfolgen. Die weitere Datenübertragungseinheit 92 ist dazu vorgesehen, Buchungsdaten über einen Satelliten 98 oder über ein Abfertigungsgebäude 100, insbesondere ein Flughafengebäude, auszutauschen. Die weitere Datenübertragungseinheit 92 weist eine zweite Sende- und/oder Empfangseinheit 102 auf. Die zweite Sende- und/oder Empfangseinheit 102 umfasst eine weitere WLAN-Antenne 104. Die weitere WLAN-Antenne 104 ist an einer Außenseite des Transportmittels 10 angeordnet. Die weitere Datenübertragungseinheit 92 weist eine dritte Sende- und/oder Empfangseinheit 106 auf. Die dritte Sende- und/oder Empfangseinheit 106 umfasst eine Satellitenantenne 108. Die Satellitenantenne 108 ist an der Außenseite des Transportmittels 10 angeordnet. Die dritte Sende- und/oder Empfangseinheit 106 ist dazu vorgesehen, Daten über den Satelliten 98 mit dem zweiten externen Gerät 96 auszutauschen. Das erste externe Gerät 94 und das zweite externe Gerät 96 sind dazu vorgesehen, Daten miteinander auszutauschen.

Das Zubuchungs- und/oder Abbuchungssystem 42 umfasst mehrere Identifikationseinheiten 110. Die Identifikationseinheiten 110 sind in den ersten Sitzvorrichtungen 14 und den zweiten Sitzvorrichtungen 16 angeordnet. Jedem Sitz 24, 26, 28 der ersten Sitzvorrichtungen 14 ist eine Identifikationseinheit 110 zugeordnet. Dem Sitz 38 der zweiten Sitzvorrichtungen 16 ist eine Identifikationseinheit 110 zugeordnet. Im vorliegenden Fall weisen die Identifikationseinheiten 110 jeweils eine Kamera 112 auf. Die Identifikationseinheiten 110 sind dazu vorgesehen, eine korrekte Zuordnung eines Identifikationsmittels zu einer der ersten Sitzvorrichtungen 14 oder einer der zweiten Sitzvorrichtungen 16 zu prüfen. Das Identifikationsmittel ist im vorliegenden Fall als eine nicht näher dargestellte Bordkarte ausgebildet. Die Bordkarte weist einen optischen Code auf, der von den Identifikationseinheiten 110 erfassbar ist. Der optische Code ist als ein Barcode oder als ein QR-Code ausgebildet. Die Kamera 112 ist dazu vorgesehen, den optischen Code zu scannen. Die Bordkarte ist als eine elektronische Bordkarte ausgebildet. Die Bordkarte ist auf dem PED 58 des Nutzers abbildbar. Grundsätzlich kann die Bordkarte auch aus einem Papier und/oder aus einem Kunststoff gebildet sein. Die elektronische Bordkarte ist als ein elektronischer Datensatz ausgebildet. Dabei ist die elektronische Bordkarte alternativ zu der Kamera 112 drahtlos an die Identifikationseinheit 110 übertragbar, im vorliegenden Fall mittels Nahfeldkommunikation oder Bluetooth. Grundsätzlich kann die Identifikationseinheit 110 auch einen RFID-Leser aufweisen. Grundsätzlich kann das Identifikationsmittel auch als ein Ausweisdokument, als eine Kundenkarte oder als eine Kreditkarte ausgebildet sein.

Das Zubuchungs- und/oder Abbuchungssystem 42 umfasst mehrere Bezahlungseinheiten 114. Die Bezahlungseinheiten 114 sind in den ersten Sitzvorrichtungen 14 und den zweiten Sitzvorrichtungen 16 angeordnet. Jedem Sitz 24, 26, 28, 38 der Sitzvorrichtungen 14, 16 ist eine Bezahlungseinheit 114 zugeordnet. Die Bezahlungseinheiten 114 sind zu einer Bezahlung einer Zubuchung von den individuellen Serviceleistungen und den Komforteigenschaften vorgesehen. Die Bezahlungseinheiten 114 sind mit der Recheneinheit 44 gekoppelt. Die Bezahlungseinheiten 114 weisen jeweils eine nicht näher dargestellte Funkschnittstelle auf. Die Funkschnittstelle ist im vorliegenden Fall als eine Nahfeldkommunikationsschnittstelle ausgebildet. Die Funkschnittstelle ist zu einer Übertragung von Bezahlungsdaten zwischen dem PED 58 und der Recheneinheit 44 vorgesehen. Ein Bezahlungsvorgang wird mittels des PED 58 durchgeführt. Das PED 58 ist dazu vorgesehen, zumindest eine mobile Bezahlungsapplikation, beispielsweise Apple Pay^{®} und/oder Google Pay^{™}, auszuführen. Grundsätzlich können die Bezahlungseinheiten 114 auch als eine zentrale Bezahlungseinheit ausgebildet sein, die beispielsweise an einer Tür 116 des Transportmittels 10 angeordnet ist.

Das Zubuchungs- und/oder Abbuchungssystem 42 umfasst im vorliegenden Fall eine Ausgabeeinheit 118. Die Ausgabeeinheit 118 ist dazu vorgesehen, Buchungsdaten für die ersten Sitzvorrichtungen 14 und die zweiten Sitzvorrichtungen 16 auszugeben. Die Ausgabeeinheit 118 weist im vorliegenden Fall einen nicht näher dargestellten Personalbildschirm und einen nicht näher dargestellten Drucker auf. Der Personalbildschirm ist als ein Flight Attendant Panel ausgebildet. Grundsätzlich kann das Zubuchungs- und/oder Abbuchungssystem 42 mehrere Ausgabeeinheiten 118 umfassen, die an mehreren Stellen in dem Transportmittel 10 angeordnet sind. Grundsätzlich ist es auch möglich, dass Buchungsdaten über die weitere Datenübertragungseinheit 92 an das erste externe Gerät 94 oder an das zweite externe Gerät 96 übermittelt werden. Dadurch kann vorteilhaft eine optimierte und vorgeplante Wartung und Reinigung von Sitzeinheiten sowie eine statistische Nutzungsauswertung ermöglicht werden.

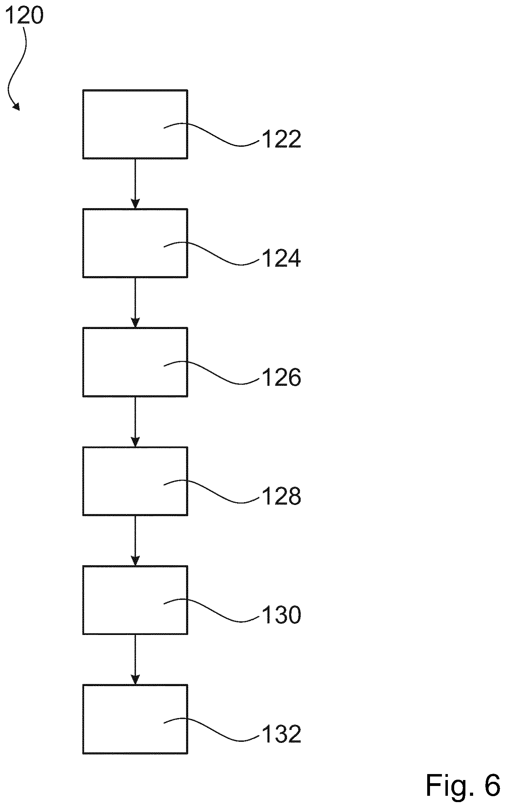

In der Figur 6 ist ein Verfahren 120 zum Betrieb des Sitzsystems 12 gezeigt. In einem ersten Verfahrensschritt 122 bucht der Nutzer zumindest ein Ticket für das Transportmittel 10, beispielsweise mobil, von einem Computer oder an einem Ticketschalter. Bei einer Buchung des zumindest einen Tickets werden dem Nutzer Angebote für Zubuchungen und/oder Abbuchungen von individuellen Serviceleistungen und/oder Komforteigenschaften unterbreitet. Der Nutzer kann individuelle Serviceleistungen und Komforteigenschaften während der Buchung des zumindest einen Tickets hinzubuchen und/oder abbuchen. In einem zweiten Verfahrensschritt 124 wird der Nutzer für eine Reise mit dem Transportmittel 10 abgefertigt. Die Abfertigung des Nutzers umfasst zumindest einen Check-In-Vorgang, einen Wartevorgang und einen Boarding-Vorgang. Bei der Abfertigung des Nutzers werden dem Nutzer Angebote für Zubuchungen von individuellen Serviceleistungen und Komforteigenschaften unterbreitet. Der Nutzer kann individuelle Serviceleistungen und/oder Komforteigenschaften während der Abfertigung, beispielsweise an einem Check-In-Schalter oder einem Informationsschalter, hinzubuchen und/oder abbuchen. In einem dritten Verfahrensschritt 126 werden Buchungsdaten an das Transportmittel 10 gesendet. Das Transportmittel 10 empfängt Buchungsdaten von dem ersten externen Gerät 94 oder dem zweiten externen Gerät 96 über die weitere Datenübertragungseinheit 92. Die Buchungsdaten werden in der Recheneinheit 44 gespeichert. In einem vierten Verfahrensschritt 128 platziert sich der Nutzer in einer der ersten Sitzvorrichtungen 14 oder in einer der zweiten Sitzvorrichtungen 16. Der Nutzer scannt die auf seinem PED 58 angezeigte Bordkarte über die Kamera 112. Mittels der Identifikationseinheit 110 wird geprüft, ob der Nutzer den ihm zugewiesenen Sitz 24, 26, 28, 38 eingenommen hat. Hat der Nutzer den ihm zugewiesenen Sitz 24, 26, 28, 38 eingenommen, werden die Buchungsdaten für den Nutzer aus der Recheneinheit 44 verarbeitet. Bereits zugebuchte individuelle Serviceleistungen und Komforteigenschaften sind von dem Nutzer nach einer Freigabe durch die Identifikationseinheit 110 nutzbar. In einem fünften Verfahrensschritt 130 werden dem Nutzer Angebote für Zubuchungen von individuellen Serviceleistungen und/oder Komforteigenschaften über den Bildschirm 54 unterbreitet. Der Nutzer kann eine Zubuchung von individuellen Serviceleistungen und Komforteigenschaften während der Reise hinzubuchen. Der Nutzer kann mittels des PEDs 58 individuelle Serviceleistungen und Komforteigenschaften hinzubuchen. Der Nutzer kann mittels der Bezahlungseinheit 114 eine Zubuchung von individuellen Serviceleistungen und Komforteigenschaften bezahlen. Die Bezahlungseinheit 114 tauscht dabei Daten mit dem ersten externen Gerät 94 oder dem zweiten externen Gerät 96 aus. Grundsätzlich ist auch denkbar, dass das PED 58 für eine Bezahlung einer Zubuchung genutzt werden kann, beispielsweise durch eine kontaktlose Datenübermittlung. Die neu hinzugebuchten individuellen Serviceleistungen und Komforteigenschaften werden in der Recheneinheit 44 gespeichert. Dabei werden die Buchungsdaten aktualisiert. Neu hinzugebuchte individuelle Serviceleistungen und Komforteigenschaften sind von dem Nutzer nach einer Freigabe durch die Bezahlungseinheit 114 nutzbar. In einem sechsten Verfahrensschritt 132 werden die Buchungsdaten an die Ausgabeeinheit 118 gesendet. Eine Crew kann mittels der Ausgabeeinheit 118 erkennen, welcher Nutzer welche individuellen Serviceleistungen und Komforteigenschaften hinzugebucht hat. Die Buchungsdaten werden mittels des Druckers ausgedruckt. Dabei kann ein Reinigungspersonal und ein Wartungspersonal erkennen, welche mit den individuellen Serviceleistungen und Komforteigenschaften in Verbindung stehenden Sitzeinheiten gereinigt und/oder gewartet werden müssen. Die Buchungsdaten werden über die weitere Datenübertragungseinheit 92 an das erste externe Gerät 94 oder an das zweite externe Gerät 96 gesendet.

### Bezugszeichen

- 10: Transportmittel
- 12: Sitzsystem
- 14: Sitzvorrichtung
- 16: Sitzvorrichtung
- 18: Kabine
- 20: Kabinenboden
- 22: Sitzabteil
- 24: Sitz
- 26: Sitz
- 28: Sitz
- 30: Sitzbereich
- 32: Sitzbereich
- 34: Sitzbereich
- 36: Sitzabteil
- 38: Sitz
- 40: Sitzbereich
- 42: Zubuchungs- und/oder Abbuchungssystem
- 44: Recheneinheit
- 46: Datenübertragungseinheit
- 48: Sende- und/oder Empfangseinheit
- 50: Datenkabel
- 52: Bus-System
- 54: Bildschirm
- 56: Bildschirm
- 58: PED
- 60: WLAN-Antenne
- 61: Fernbedienung
- 62: Standardbetriebszustand
- 64: Betriebszustand
- 66: Rückenlehne
- 68: Armlehne
- 70: Kopfstütze
- 72: Sitzboden
- 74: Beinstütze
- 76: Fußstütze
- 78: Tischeinheit
- 80: Getränkehalter
- 82: Verstaueinheit
- 83: Gang
- 84: Beleuchtungselement
- 86: Stromanschluss
- 88: Freigabeeinheit
- 90: Steuereinheit
- 92: Datenübertragungseinheit
- 94: externes Gerät
- 96: externes Gerät
- 98: Satellit
- 100: Abfertigungsgebäude
- 102: Sende- und/oder Empfangseinheit
- 104: WLAN-Antenne
- 106: Sende- und/oder Empfangseinheit
- 108: Satellitenantenne
- 110: Identifikationseinheit
- 112: Kamera
- 114: Bezahlungseinheit
- 116: Tür
- 118: Ausgabeeinheit
- 120: Verfahren
- 122: Verfahrensschritt
- 124: Verfahrensschritt
- 126: Verfahrensschritt
- 128: Verfahrensschritt
- 130: Verfahrensschritt
- 132: Verfahrensschritt

## Patentansprüche

1. Sitzsystem, insbesondere Flugzeugsitzsystem, mit zumindest einer Sitzvorrichtung (14, 16), die wenigstens einen Sitz (24, 26, 28, 38) umfasst, und mit einem Zubuchungs- und/oder Abbuchungssystem (42), wobei das Zubuchungs- und/oder Abbuchungssystem (42) zumindest dazu vorgesehen ist, zumindest eine individuelle Serviceleistung und zumindest eine Komforteigenschaft zuzubuchen und/oder abzubuchen, wobei die zumindest eine Sitzvorrichtung (14, 16) wenigstens eine verstellbare Sitzfunktionseinheit umfasst, welche die zumindest eine zubuchbare und/oder abbuchbare Komforteigenschaft umfasst und welche zumindest einen Standardbetriebszustand (62) und zumindest einen weiteren Betriebszustand (64) aufweist, wobei die wenigstens eine Sitzfunktionseinheit dazu vorgesehen ist, bei einer Zubuchung der zumindest einen Komforteigenschaft in den zumindest einen weiteren Betriebszustand (64) verstellt zu werden, wobei das Zubuchungs- und/oder Abbuchungssystem (42) zumindest eine elektromechanische Freigabeeinheit (88) aufweist, die dazu vorgesehen ist, die wenigstens eine Sitzfunktionseinheit freizugeben, wobei das Sitzsystem zumindest eine Kommunikationsschnittstelle aufweist, die dazu vorgesehen ist, eine Kommunikation zwischen einer Person und zumindest einer Recheneinheit (44) zu ermöglichen, wobei die zumindest eine individuelle Serviceleistung und/oder die zumindest eine Komforteigenschaft mittels der zumindest einen Kommunikationsschnittstelle zubuchbar und/oder abbuchbar sind/ist, **dadurch gekennzeichnet, dass** die zumindest eine Kommunikationsschnittstelle als ein persönliches elektronisches Gerät (58), PED, ausgebildet ist.

2. Sitzsystem nach Anspruch 1, **gekennzeichnet durch** zumindest eine Datenübertragungseinheit (46), wobei die zumindest eine Datenübertragungseinheit (46) zumindest dazu vorgesehen ist, die zumindest eine Recheneinheit (44), insbesondere eine zentrale Recheneinheit, mit der zumindest einen Sitzvorrichtung (14, 16) für eine Datenübertragung kabellos und/oder kabelgebunden zu verbinden.

3. Sitzsystem nach Anspruch 2, **dadurch gekennzeichnet, dass** die zumindest eine Datenübertragungseinheit (46) zu einer Datenübertragung von Buchungsdaten vorgesehen ist.

4. Sitzsystem nach einem der vorhergehenden Ansprüche, **gekennzeichnet durch** zumindest eine Datenübertragungseinheit (46), wobei die zumindest eine Recheneinheit (44), insbesondere eine zentrale Recheneinheit, und/oder die zumindest eine Datenübertragungseinheit (46) zumindest eine weitere Funktion, insbesondere eine In-Flight-Entertainment-, IFE-Funktion neben einer Zubuchungs- und/oder Abbuchungsfunktion des Zubuchungs- und/oder Abbuchungssystems (42) aufweist.

5. Sitzsystem nach einem der vorhergehenden Ansprüche, **dadurch gekennzeichnet, dass** die individuelle Serviceleistung als eine Personenkommunikationsdienstleistung ausgebildet ist.

6. Sitzsystem nach Anspruch 1, **dadurch gekennzeichnet, dass** die wenigstens eine Sitzfunktionseinheit zumindest im Wesentlichen von einer mechanischen Komponente gebildet ist, wobei die mechanische Komponente dazu vorgesehen ist, bei einer Zubuchung der zumindest einen Komforteigenschaft in den zumindest einen weiteren Betriebszustand (64) bewegt zu werden.

7. Sitzsystem nach Anspruch 6, **dadurch gekennzeichnet, dass** die mechanische Komponente als eine Rückenlehne (66), als eine Armlehne (68), als eine Kopfstütze (70), als ein Sitzboden (72), als eine Beinstütze (74), als eine Fußstütze (76), als eine Tischeinheit (78), als ein PED-Halter, als ein Getränkehalter (80), als eine Verstaueinheit (82), als eine Türeinheit und/oder als ein Sichtschutzelement ausgebildet ist.

8. Sitzsystem nach Anspruch 1 oder 6, **dadurch gekennzeichnet, dass** die wenigstens eine Sitzfunktionseinheit als ein Bildschirm (54, 56), als ein Beleuchtungselement (84), als ein Stromanschluss (86), als ein Massagesystem und/oder als eine Sitzheizung ausgebildet ist.

9. Sitzsystem nach Anspruch 8, **dadurch gekennzeichnet, dass** die zumindest eine Freigabeeinheit (88) wenigstens ein Freigabeelement aufweist, das zumindest teilweise aus einer Formgedächtnislegierung gebildet ist.

10. Sitzsystem nach einem der vorhergehenden Ansprüche, **gekennzeichnet durch** zumindest eine Datenübertragungseinheit (92), die zumindest dazu vorgesehen ist, Buchungsdaten von zumindest einem externen Gerät (94, 96), insbesondere einem Server und/oder einer Cloud, zu empfangen.

11. Sitzsystem nach einem der vorhergehenden Ansprüche, **dadurch gekennzeichnet, dass** das Zubuchungs- und/oder Abbuchungssystem (42) zumindest eine Identifikationseinheit (110) umfasst, die dazu vorgesehen ist, eine korrekte Zuordnung eines Identifikationsmittels, insbesondere einer Bordkarte, zu der zumindest einen Sitzvorrichtung (14, 16) zu prüfen.

12. Sitzsystem nach einem der vorhergehenden Ansprüche, **dadurch gekennzeichnet, dass** das Zubuchungs- und/oder Abbuchungssystem (42) zumindest eine Bezahlungseinheit (114) umfasst, die zu einer Bezahlung einer Zubuchung von der zumindest einen individuellen Serviceleistung und/oder der zumindest einen Komforteigenschaft vorgesehen ist.

13. Sitzsystem nach einem der vorhergehenden Ansprüche, **dadurch gekennzeichnet, dass** das Zubuchungs- und/oder Abbuchungssystem (42) zumindest eine Ausgabeeinheit (118) umfasst, die dazu vorgesehen ist, Buchungsdaten für die zumindest eine Sitzvorrichtung (14, 16) auszugeben.

14. Verfahren (120) zum Betrieb eines Sitzsystems (12) nach einem der Ansprüche 1 bis 13.

## Claims

1. Seating system, in particular aircraft seating system, having at least one seating device (14, 16) which comprises at least one seat (24, 26, 28, 38), and having a system for additionally booking and/or removing a booking (42), wherein the system for additionally booking and/or removing a booking (42) is at least configured for additionally booking and/or removing the booking of at least one individual service performance and at least one comfort property, wherein the at least one seating device (14, 16) comprises at least one adjustable seat function unit which comprises the at least one comfort property the booking of which can be added and/or removed, and which has at least one standard operating state (62) and at least one further operating state (64), wherein the at least one seat function unit is configured for being adjusted into the at least one further operating state (64) when additionally booking the at least one comfort property, wherein the system for additionally booking and/or removing a booking (42) has at least one electromechanical enabling unit (88) which is configured for enabling the at least one seat function unit, wherein the seating system has at least one communication interface which is configured for making possible communication between a person and at least one computing unit (44), wherein the at least one individual service performance and/or the at least one comfort property can be additionally booked and/or the booking of which can be removed by means of the at least one communication interface, **characterized in that** the at least one communication interface is designed as a personal electronic device (58), PED.

2. Seating system according to claim 1, **characterized by** at least one data transmission unit (46), wherein the at least one data transmission unit (46) is at least configured for connecting the at least one computing unit (44), in particular a central computing unit, to the at least one seating device (14, 16) for data transmission wirelessly and/or via cable.

3. Seating system according to claim 2, **characterized in that** the at least one data transmission unit (46) is configured for data transmission of booking data.

4. Seating system according to one of the preceding claims, **characterized by** at least one data transmission unit (46), wherein the at least one computing unit (44), in particular a central computing unit, and/or the at least one data transmission unit (46) has at least one further function, in particular an in-flight entertainment, IFE function, in addition to an additionally booking and/or removing a booking function of the system for additionally booking and/or removing a booking (42).

5. Seating system according to one of the preceding claims, **characterized in that** the individual service performance is designed as a personal communication service.

6. Seating system according to claim 1, **characterized in that** the at least one seat function unit is formed at least substantially by a mechanical component, wherein the mechanical component is configured for being moved into the at least one further operating state (64) when additionally booking the at least one comfort property.

7. Seating system according to claim 6, **characterized in that** the mechanical component is designed as a backrest (66), as an armrest (68), as a headrest (70), as a seat bottom (72), as a leg support (74), as a foot support (76), as a table unit (78), as a PED holder, as a beverage holder (80), as a stowage unit (82), as a door unit and/or as a privacy element.

8. Seating system according to claim 1 or 6, **characterized in that** the at least one seat function unit is designed as a screen (54, 56), as a lighting element (84), as a power connection (86), as a massage system and/or as a seat heater.

9. Seating system according to claim 8, **characterized in that** the at least one enabling unit (88) has at least one enabling element which is formed at least partially from a shape memory alloy.

10. Seating system according to one of the preceding claims, **characterized by** at least one data transmission unit (92) which is at least configured for receiving booking data from at least one external device (94, 96), in particular a server and/or a cloud.

11. Seating system according to one of the preceding claims, **characterized in that** the system for additionally booking and/or removing a booking (42) comprises at least one identification unit (110) which is configured for checking a correct assignment of an identification means, in particular an on-board map, to the at least one seating device (14, 16).

12. Seating system according to one of the preceding claims, **characterized in that** the system for additionally booking and/or removing a booking (42) comprises at least one payment unit (114) which is configured for paying for additionally booking of the at least one individual service performance and/or the at least one comfort property.

13. Seating system according to one of the preceding claims, **characterized in that** the system for additionally booking and/or removing a booking (42) comprises at least one output unit (118) which is configured for outputting booking data for the at least one seating device (14, 16).

14. Method (120) for operating a seating system (12) according to one of claims 1 to 13.

## Revendications

1. Système de siège, en particulier système de siège d'avion, avec au moins un dispositif de siège (14, 16), qui comprend au moins un siège (24, 26, 28, 38), et avec un système pour ajouter et/ou supprimer une réservation (42), où le système pour ajouter et/ou supprimer une réservation (42) est au moins prévu pour ajouter et/ou supprimer au moins une prestation de service individuelle et au moins une propriété de confort, où l'au moins un dispositif de siège (14, 16) comprend au moins une unité fonctionnelle de siège réglable, qui comprend l'au moins une propriété de confort ajoutable et/ou supprimable et qui présente au moins un état de fonctionnement standard (62) et au moins un autre état de fonctionnement (64), où l'au moins une unité fonctionnelle de siège est prévue pour être réglée dans l'au moins un autre état de fonctionnement (64) lors d'un ajout de l'au moins une propriété de confort, où le système pour ajouter et/ou supprimer une réservation (42) présente au moins une unité de libération électromécanique (88), qui est prévue pour libérer l'au moins une unité fonctionnelle de siège, où le système de siège présente au moins une interface de communication, qui est prévue pour permettre une communication entre une personne et au moins une unité de calcul (44), où l'au moins une prestation de service individuelle et/ou l'au moins une propriété de confort est/sont ajoutable(s) et/ou supprimable(s) au moyen de l'au moins une interface de communication, **caractérisé en ce que** l'au moins une interface de communication est réalisée sous forme d'appareil électronique personnel (58), PED.

2. Système de siège selon la revendication 1, **caractérisé par** au moins une unité de transmission de données (46), où l'au moins une unité de transmission de données (46) est au moins prévue pour relier sans fil et/ou par câble l'au moins une unité de calcul (44), en particulier une unité de calcul centrale, à l'au moins un dispositif de siège (14, 16) pour une transmission de données.

3. Système de siège selon la revendication 2, **caractérisé en ce que** l'au moins une unité de transmission de données (46) est prévue pour une transmission de données de réservation.

4. Système de siège selon l'une des revendications précédentes, **caractérisé par** au moins une unité de transmission de données (46), où l'au moins une unité de calcul (44), en particulier une unité de calcul centrale, et/ou l'au moins une unité de transmission de données (46) présente au moins une autre fonction, en particulier une fonction de divertissement en vol, fonction IFE, en plus d'une fonction d'ajout et/ou de suppression de réservation du système pour ajouter et/ou supprimer une réservation (42).

5. Système de siège selon l'une des revendications précédentes, **caractérisé en ce que** la prestation de service individuelle est réalisée sous forme de prestation de service de communication personnelle.

6. Système de siège selon la revendication 1, **caractérisé en ce que** l'au moins une unité fonctionnelle de siège est formée au moins essentiellement par un composant mécanique, où le composant mécanique est prévu pour être déplacé dans l'au moins un autre état de fonctionnement (64) lors d'un ajout de l'au moins une propriété de confort.

7. Système de siège selon la revendication 6, **caractérisé en ce que** le composant mécanique est réalisé sous forme de dossier (66), d'accoudoir (68), d'appuie-tête (70), d'assise du siège (72), de repose-jambes (74), de repose-pieds (76), d'unité de table (78), de support PED, de support de boissons (80), d'unité de rangement (82), d'unité de porte et/ou d'élément de protection visuelle.

8. Système de siège selon la revendication 1 ou 6, **caractérisé en ce que** l'au moins une unité fonctionnelle de siège est réalisée sous forme d'écran (54, 56), d'élément d'éclairage (84), de connexion électrique (86), de système de massage et/ou de chauffage de siège.

9. Système de siège selon la revendication 8, **caractérisé en ce que** l'au moins une unité de libération (88) présente au moins un élément de libération, qui est formé au moins partiellement d'un alliage à mémoire de forme.

10. Système de siège selon l'une des revendications précédentes, **caractérisé par** au moins une unité de transmission de données (92), qui est au moins prévue pour recevoir des données de réservation d'au moins un appareil externe (94, 96), en particulier un serveur et/ou un cloud.

11. Système de siège selon l'une des revendications précédentes, **caractérisé en ce que** le système pour ajouter et/ou supprimer une réservation (42) comprend au moins une unité d'identification (110), qui est prévue pour vérifier une affectation correcte d'un moyen d'identification, en particulier d'une carte d'embarquement, à l'au moins un dispositif de siège (14, 16).

12. Système de siège selon l'une des revendications précédentes, **caractérisé en ce que** le système pour ajouter et/ou supprimer une réservation (42) comprend au moins une unité de paiement (114), qui est prévue pour un paiement d'un ajout de l'au moins une prestation de service individuelle et/ou de l'au moins une propriété de confort.

13. Système de siège selon l'une des revendications précédentes, **caractérisé en ce que** le système pour ajouter et/ou supprimer une réservation (42) comprend au moins une unité de sortie (118), qui est prévue pour délivrer des données de réservation pour l'au moins un dispositif de siège (14, 16).

14. Procédé (120) pour faire fonctionner un système de siège (12) selon l'une des revendications 1 à 13.
